# EUROPEAN PATENT APPLICATION

(11) **EP 1 878 351 A2**
(43) Date of publication of application: **16.01.2008**
(21) Application number: 07111072.0
(22) Date of filing: 26.06.2007
(51) Int. Cl.: A23N 15/00

(54) **Method for removing bean sprout both end portions and bean sprouts treating devices therefor**

(30) Priority: 14.07.2006 JP 2006194648; 14.07.2006 JP 2006194651; 14.07.2006 JP 2006194654
(71) Applicant: Daisey Machinery Co., Ltd., Tsurugashima-shi, Saitama-ken 350-2217 (JP)
(72) Inventor: Suzuki, Tomosaburo, Tsurugashima-shi Saitama-ken 350-2217 (JP); Ishikawa, Noboru, Tsurugashima-shi Saitama-ken 350-2217 (JP); Kawakami, Sanji, Tsurugashima-shi Saitama-ken 350-2217 (JP)
(74) Representative: Henkel, Feiler & Hänzel

(57) **Abstract**

Method for removing bean sprout both end portions and treating devices therefor. The method comprises a bean sprouts separating step, a bean sprouts arraying step during which bean sprouts supplied onto a grooved plate (31,32) are moved into longitudinal grooves (33) and have their lengthwise directions arrayed and a bean sprout both end portions cutting and removing step to cut and remove both end portions of the bean sprouts by a bean sprout both end portions cutting and removing device comprising a cutting conveyor (62) and a transfer conveyor (68) provided with transfer bars (67) and arranged above the cutting conveyor (62) to be continuously moved at a velocity lower than a velocity of the cutting conveyor (62). By a relative movement between the both conveyors (62,68), the bean sprouts have their root portions and sprouting portions cut off by the cutters.

## Description

### BACKGROUND OF THE INVENTION

### Field of the Invention

The present invention relates to a bean sprout both end portions removing method for mechanically cutting and removing root portions and sprouting portions as both end portions of bean sprouts and also relates to bean sprouts treating devices, including a bean sprouts separating device, a bean sprouts arraying device and a bean sprout both end portions cutting and removing device, suitable for carrying out this method.

### Description of the Prior Art

Nowadays, while the bean sprouts distributed as commercial goods in the market are of the state that shells, hairy tails, wastes, etc. are removed from the bean sprouts as harvested, root portions connecting from the hairy tails and sprouting portions as both end portions of the bean sprouts remain as they are. As the root portions are often slightly darkish and also the sprouting portions are easily deteriorated to become darkish within a day or so, there is a problem of discoloration. Hence, it is preferable to remove the root portions and sprouting portions from the bean sprouts as harvested. Nevertheless, as it is difficult to mechanically remove these both end portions only, conventionally, the bean sprouts of the state as mentioned above are accepted in the market. Also, to remove the root portions and sprouting portions invites a cost increase. Hence, it is the present situation that the bean sprouts are distributed in the market with their root portions and sprouting portions remaining as they are.

When the bean sprouts are to be used as a high-grade food stuff, they are usually used with their root portions and sprouting portions being removed one by one by hand.

As mentioned above, it is desired to supply bean sprouts without shortcomings of the root portions that are slightly darkish and of the sprouting portions that soon become darkish. While the applicant here has heretofore proposed a technology for mechanically removing root portions of bean sprouts as disclosed by Patent Document 1 below, according to this technology, sprouting portions could be only partially removed. Also, as disclosed by Patent Document 2, such a technology as mechanically removes both of root portions and sprouting portions of bean sprouts is proposed. While this is considered one way for supplying bean sprouts without root portions and sprouting portions, this technology is still insufficient for completely removing both end portions of the beans sprouts.
Patent Document 1: Japanese laid-open patent application No. 1998-136959
Patent Document 2: Japanese laid-open patent application No. 2003-310229

### SUMMARY OF THE INVENTION

In view of the shortcomings in the prior art, it is an object of the present invention to provide a practical bean sprout both end portions removing method for mechanically effectively removing both end portions of bean sprouts. It is also an object of the present invention to provide bean sprouts treating devices, including a bean sprouts separating device, a bean sprouts arraying device and a bean sprout both end portions cutting and removing device, suitable for carrying out this method.

In order to achieve the above-mentioned objects, the present invention provides a bean sprout both end portions removing method for mechanically removing root portions and sprouting portions of bean sprouts, comprising steps of: a bean sprouts separating step to separate and remove undergrown bean sprouts and short bean sprout fractions from bean sprouts as harvested, a bean sprouts arraying step to array lengthwise directions of the bean sprouts separated by the bean sprouts separating step and a bean sprout both end portions cutting and removing step to cut and remove both end portions of the bean sprouts arrayed by the bean sprouts arraying step.

In the bean sprout both end portions removing method according to the present invention, the above-mentioned bean sprouts separating step may be carried out by: supplying the bean sprouts to be separated in a dispersed state onto a lattice conveyor that is moved forming a plurality of lattice spaces arranged with a predetermined interval maintained between each of the lattice spaces and transferring the lattice conveyor together with a belt conveyor that is arranged below the lattice conveyor with a small gap maintained from the lattice conveyor so that the bean sprouts not less than a predetermined length are left on the lattice conveyor and the bean sprouts less than the predetermined length are separated onto the belt conveyor and removed.

Also, in the bean sprout both end portions removing method according to the present invention, the above-mentioned bean sprouts arraying step may be carried out by: supplying the bean sprouts onto a grooved plate that is formed with a plurality of longitudinal grooves arranged in parallel with each other and is applied with vibration having upward and downward directional components and moving the bean sprouts so supplied onto the grooved plate to be received into the longitudinal grooves so that the lengthwise directions of the bean spouts are arrayed.

Also, the above-mentioned bean sprouts arraying step may be carried out by: putting the bean sprouts into a hopper of which a horizontal directional cross section is a flat shape and vibrating them with horizontal directional components and transferring a conveyor below the hopper in a direction orthogonal to a plurality of partitions, the partitions being arranged on the conveyor with an interval maintained between each of the partitions in a direction along a minor side of the cross sectional shape of the hopper, so that the bean sprouts falling down from the hopper are received on the conveyor and transferred having their lengthwise directions arrayed in a direction along the partitions.

Also, in the bean sprouts both end portions removing method according to the present invention, the above-mentioned bean sprouts both end portions cutting and removing step may be carried out by: supplying the bean sprouts onto a cutting conveyor, the cutting conveyor being provided with a plurality of cutters, each cutter having its each side edge formed with a blade portion, arranged horizontally and orthogonally to a conveyor running direction with the blade portion of one cutter being opposed to the blade portion of an adjacent cutter with an interval maintained between them, and moving a transfer conveyor at a velocity different from a velocity of the cutting conveyor, the transfer conveyor comprising a plurality of transfer bars and being arranged above the cutting conveyor with a small gap maintained from the cutting conveyor, so that by a relative movement between the cutting conveyor and the transfer conveyor, the root portions and sprouting portions of the bean sprouts are cut off and removed.

Also, in the bean sprout both end portions removing method according to the present invention, the above-mentioned bean sprout both end portions cutting and removing step may be carried out by: supplying the bean sprouts having their lengthwise directions vertically arrayed to be received into a plurality of bean sprouts receiving cells, each cell being formed with a sleeve shape having its both ends open and being arranged having its lengthwise direction vertically directed, continuously arranged in a row to rise on an endless transfer conveyor having upper and lower running paths and in each of the upper and lower running paths of the transfer conveyor, while end portions of the bean sprouts are received on a bean sprout lower end portions receiving member that is arranged with an interval maintained from lower ends of the bean sprouts receiving cells, transferring the bean sprouts in this state so that end portions of the bean sprouts projecting between the lower ends of the bean sprouts receiving cells and the bean sprout lower end portions receiving member are cut off by a cutter.

Also, in the bean sprout both end portions removing method according to the present invention, the above-mentioned bean sprout both end portions cutting and removing step may be carried out by: supplying the bean sprouts having their lengthwise directions arrayed horizontally and orthogonally to a conveyor running direction to be received into a plurality of bean sprouts receiving sections, each section having its lengthwise direction arrayed horizontally and orthogonally to the conveyor running direction, continuously arranged along the conveyor running direction on a conveyor and arraying end portions of the bean sprouts so received into the beans sprouts receiving sections, the end portions projecting from each side edge of the bean sprouts receiving sections, by a bean sprout end portions arraying member arranged on each side of the conveyor with an interval maintained from a side edge of the conveyor so that the projecting end portions of the bean sprouts are cut off by a cutter.

According to the bean sprout both end portions removing method of the present invention, undergrown bean sprouts and short bean sprout fractions are separated and removed from the bean sprouts as harvested and the bean sprouts not less than the predetermined length are separated to remain. Then, the bean sprouts not less than the predetermined length so separated are arrayed so as to have their lengthwise directions directed in the same direction and both end portions of the bean sprouts having their lengthwise directions arrayed are cut off. Thereby, root portions and sprouting portions of the bean sprouts can be effectively and efficiently removed from the bean sprouts as harvested.

In the bean sprout both end portions removing method of the present invention, the method comprising the bean sprouts separating step, bean sprouts arraying step and bean sprout both end portions cutting and removing step can be carried out by appropriately selecting and combining the following respective steps: that is, the bean sprouts separating step separating the bean sprouts while they are being transferred by the lattice conveyor and the belt conveyor arranged below the lattice conveyor with the small gap maintained from the lattice conveyor, the bean sprouts arraying step arraying the bean sprouts by the grooved plate formed with the longitudinal grooves arranged in parallel with each other and vibrated with upward and downward directional vibration components, the bean sprout both end portions cutting and removing step cutting and removing the both end portions of the bean sprouts by the relative movement between the cutting conveyor provided with the cutters having their side edges formed with the blade portions and the transfer conveyor arranged above the cutting conveyor with the small gap maintained from the cutting conveyor, the bean sprout both end portions cutting and removing step by the transfer conveyor provided with the bean sprouts receiving cells of the sleeve shape having its both ends open and the bean sprout lower end portions receiving member and the bean sprout both end portions cutting and removing step by the conveyor provided with the bean sprouts receiving sections arranged laterally, that is, horizontally and orthogonally to the conveyor running direction, and the bean sprout end portions arraying member arraying the projecting end portions of the bean sprouts on both sides of the bean sprouts receiving sections. By selectively employing these steps, the bean sprout both end portions can be securely removed.

According to the bean sprout both end portions removing method of the present invention, it is not necessary to employ a specific method for rearing the bean sprouts by which root portions can grow regularly and uniformly. Thus, using the bean sprouts that have been reared and harvested by the same method as conventionally employed, the bean sprouts separating step, bean sprouts arraying step and bean sprout both end portions cutting and removing step are sequentially applied and thereby the bean sprouts having their both end portions mechanically efficiently removed can be obtained.

As a bean sprouts separating device suitable for carrying out the above-mentioned bean sprout both end portions removing method, the present invention provides a bean sprouts separating device, wherein the bean sprouts separating device comprises a lattice conveyor to be moved being formed with a plurality of lattice spaces arranged with a predetermined interval maintained between each of the lattice spaces and a belt conveyor to run below the lattice conveyor with a small gap maintained from the lattice conveyor and bean sprouts to be treated are supplied in a dispersed state onto the lattice conveyor and transferred so that the bean sprouts not less than a predetermined length are left on the lattice conveyor and the bean sprouts less than the predetermined length are separated onto the belt conveyor and removed.

In the bean sprouts separating device according to the present invention, the lattice conveyer may comprise a plurality of longitudinal bars arranged elongating in a conveyor running direction with an interval maintained between adjacent ones of the longitudinal bars and a bar conveyor comprising a plurality of lateral bars, the lateral bars being orthogonally arranged to the longitudinal bars and fitted to an endless chain to be moved in a lengthwise direction of the longitudinal bars.

Also, in the bean sprouts separating device according to the present invention, it is preferable that the lattice spaces of the lattice conveyor are formed by bars of which cross sections or at least upper halves thereof are formed with a circular shape or a rounded shape.

In the bean sprouts separating device according to the present invention, as mentioned above, a simple construction is employed such that the lattice conveyor moves being formed with the lattice spaces arranged with the predetermined interval and the belt conveyor runs below the lattice conveyor with the small gap maintained from the lattice conveyor. According to the bean sprouts separating device of the present invention, undergrown bean sprouts and bean sprouts less than the predetermined length are caused to fall down on the belt conveyor below and separated by a riddle function of the lattice spaces of the lattice conveyor. Also, in the bean sprouts separating device of the present invention, the construction is made such that the belt conveyor is arranged below the lattice conveyor with the small gap maintained from the lattice conveyor. Hence, even if the bean sprouts not less than the predetermined length unnecessary to be separated are vertically or obliquely received into the lattice spaces of the lattice conveyor so that they might fall down passing through the lattice spaces, these bean sprouts can be supported by the belt conveyor running below the lattice conveyor with the small gap maintained from the lattice conveyor and by no means fall down to be separated from the lattice conveyor. In this way, according to the bean sprouts separating device of the present invention, only the undergrown bean sprouts and the bean sprouts less than the predetermined length can be efficiently separated and removed.

In the bean sprouts separating device according to the present invention so constructed that the lattice conveyor comprises the longitudinal bars arranged elongating in the conveyor running direction with the interval maintained between adjacent ones of the longitudinal bars and the bar conveyor comprising the lateral bars, the lateral bars being orthogonally arranged to the longitudinal bars and fitted to the endless chain to be moved in the lengthwise direction of the longitudinal bars, while the longitudinal bars intersect the lateral bars and form the lattice spaces, as the position of the longitudinal bars changes every moment following the movement of the bar conveyor, the bean sprouts supplied onto the lattice conveyor are prevented from remaining on the position of the same lateral bars and longitudinal bars and hence the undergrown short bean sprouts and broken short bean sprouts are prevented from remaining on the lattice conveyor without being separated.

In the bean sprouts separating device according to the present invention so constructed that the lattice spaces of the lattice conveyor are formed by the bars of which cross sections or at least upper halves thereof are formed with the circular shape or rounded shape, the bean sprouts placed on the bars forming the lattice spaces do not remain placed on the bars of which upper surfaces are circular or rounded but easily change their attitudes so that the undergrown and broken short bean sprouts fall down from the lattice spaces. Thus, a desired separation is carried out and the bean sprouts not less than the predetermined length only can be separated and taken out.

As a bean sprouts arraying and supplying device suitable for carrying out the above-mentioned bean sprout both and portions removing method, the present invention provides a bean sprouts arraying and supplying devices, wherein the bean sprouts arraying and supplying device comprises a grooved plate formed with a plurality of longitudinal grooves arranged in parallel with each other and a vibrator by which the grooved plate is given with vibration including upward and downward directional components and bean sprouts supplied onto the grooved plate are moved into the longitudinal grooves and supplied having their lengthwise directions arrayed.

In the bean sprouts arraying and supplying device according to the present invention, the grooved plate may be so constructed that a plurality of the grooved plates are arranged in line.

Also, in the bean sprouts arraying and supplying device according to the present invention, it is preferable that the bean sprouts arraying and supplying device is constructed comprising a bent bean sprouts removing means by which bent bean sprouts caught on crest portions of the grooved plate are removed from the grooved plate.

Further, the bean sprouts arraying and supplying device according to the present invention may be constructed comprising a water supply means by which water flow is supplied for moving the bean sprouts on the grooved plate along the grooves or an air supply means by which air flow is supplied for moving the bean sprouts on the grooved plate along the grooves. In case the water supply means is provided, it is preferable that the grooved plate is tilted to the direction to which the bean sprouts are moved so that the water is easily discharged.

In the bean sprouts arraying and supplying device according to the present invention, the grooved plate is given with the vibration including upward and downward directional vibration components. Hence, the bean sprouts supplied onto the grooved plate are moved into the longitudinal grooves of the grooved plate so that the lengthwise directions of the bean sprouts are arrayed along the longitudinal grooves of the grooved plate.

In the bean sprouts arraying and supplying device according to the present invention so constructed that the plurality of the grooved plates are arranged in line, the bean sprouts are sequentially moved on the grooved plates and the bean sprouts having their lengthwise directions sufficiently arrayed along the longitudinal grooves of the grooved plates can be supplied to the next step.

In the bean sprouts arraying and supplying device according to the present invention constructed comprising the bent bean sprouts removing means by which the bent bean sprouts caught on the crest portions of the grooved plate during the transfer of the bean sprouts by the vibration are removed from the grooved plate, the bent bean sprouts, etc. that cannot be moved into the longitudinal grooves (troughs) of the grooved plate to be arrayed along the direction of the grooves are removed by the bent bean sprouts removing means. Hence, the lengthwise directions of the bean sprouts can be snugly arrayed along the longitudinal grooves of the grooved plate.

In the bean sprouts arraying and supplying device according to the present invention constructed comprising the water supply means supplying the water flow for moving the bean sprouts on the grooved plate along the longitudinal grooves or the air supply means supplying the air flow for moving the bean sprouts on the grooved plate along the longitudinal grooves, the bean sprouts, while being arrayed, can be smoothly moved and supplied by the water flow or air flow. Especially, by the construction employing the water flow, the shells, hairy roots, wastes, etc. separated from the bean sprouts on the grooved plate and remaining sticking to the grooved plate can be removed and the arraying and supplying of the bean sprouts can be smoothly carried out, which is preferable.

As another bean sprouts arraying and supplying device suitable for carrying out the bean sprout both end portions removing method according to the present invention, the present invention provides a bean sprouts arraying and supplying device, wherein the bean sprouts arraying and supplying device comprises a hopper of which a horizontal directional cross section is a flat shape, a vibrator by which the hopper is vibrated with horizontal directional components and a conveyor arranged below the hopper and formed with a plurality of partitions arranged in a direction along a minor side of the cross section of the hopper with an interval maintained between each of the partitions, the conveyor running in a direction orthogonal to the partitions, and bean sprouts falling down from the hopper are received on the conveyor and transferred having their lengthwise directions arrayed in a direction along the partitions.

The bean sprouts arraying and supplying device according to the present invention may be so constructed that the conveyor comprises an endless chain conveyor fitted with the plurality of partitions with the interval maintained between them and an endless belt conveyor arranged on the inner side of the chain conveyor and the chain conveyor runs in the same direction as the belt conveyor at a velocity higher than a velocity of the belt conveyor. Also, it is preferable that the bean sprouts arraying and supplying device according to the present invention comprises a smoothing member for scraping down the bean sprouts caught on the partitions.

In the bean sprouts arraying and supplying device according to the present invention, there is provided the hopper of which the horizontal directional cross section is the flat shape, such as a rectangular shape or elliptical shape or the like, and which is vibrated with the horizontal directional components. The vibration is preferably given in a direction along a major side of the cross sectional flat shape. The bean sprouts passing through the hopper are vibrated in the hopper and displaced so that their lengthwise directions are directed along a lengthwise direction of the cross sectional flat shape of the hopper. Thus, when the bean sprouts are going to come out of the hopper, their lengthwise directions are arrayed in the same direction regardless of the root portions and sprouting portions in the respective end portions and the bean sprouts in this state fall down.

In the bean sprouts arraying and supplying device according to the present invention, the bean sprouts having their lengthwise directions arrayed and falling down from the hopper are received on the conveyor comprising the partitions and transferred having their lengthwise directions arrayed in the direction along the partitions. In the bean sprouts arraying and supplying device so constructed that the conveyor comprises the endless chain conveyor fitted with the partitions with the interval maintained between the partitions and the endless belt conveyor arranged on the inner side of the chain conveyor and the chain conveyor runs in the same direction as the belt conveyor at the velocity higher than the velocity of the belt conveyor, the bean sprouts received on the conveyor are forwarded by the partitions of the chain conveyor with the velocity difference between the chain conveyor and the belt conveyor. Thereby, the bean sprouts have their lengthwise directions further snugly arrayed along the partitions.

Also, in the bean sprouts arraying and supplying device according to the present invention, when the bean sprouts having their lengthwise directions arrayed and falling down from the hopper are received between the partitions of the conveyor, some of the bean sprouts remain on the partitions. Hence, by employing the construction that the smoothing member, such as a scraping-down plate, brush or the like, is provided with a small gap maintained from upper edges of the partitions or with a slight contact with the upper edges of the partitions, the bean sprouts falling down from the hopper are well received between the partitions of the conveyor and the arraying of the bean sprouts can be securely carried out.

According to the bean sprouts arraying and supplying device of the present invention, such a simple construction is employed as comprises the hopper of which the horizontal directional cross section is the flat shape, the vibrator vibrating the hopper with horizontal directional components and the conveyor arranged below the hopper and provided with the partitions. Hence, there are advantages in that the maintenance is facilitated and also the length of the device required for snugly arraying the bean sprouts can be shortened.

As a bean sprout both end portions cutting and removing device suitable for carrying out the bean sprout both end portions removing method according to the present invention, the present invention provides a bean sprout both end portions cutting and removing device, wherein the bean sprout both end portions cutting and removing device comprises a cutting conveyor provided with a plurality of cutters, each cutter having its each side edge formed with a blade portion, arranged horizontally and orthogonally to a conveyor running direction with the blade portion of one cutter being opposed to the blade portion of an adjacent cutter with an interval maintained between them and a transfer conveyor provided with a plurality of transfer bars and arranged above the cutting conveyor with a small gap maintained from the cutting conveyor to be moved at a velocity different from a velocity of the cutting conveyor and by a relative movement between said cutting conveyor and the transfer conveyor, the root portions and sprouting portions of the bean sprouts are cut off and removed.

In the bean sprout both end portions cutting and removing device according to the present invention, the blade portion of the cutter may be formed by a combination of at least two blades out of an orthogonal blade, oblique blade and parallel blade, all relative to a cutter moving direction.

Also, the bean sprout both end portions cutting and removing device according to the present invention may be so constructed that the cutting conveyor repeats transfers in the conveyor running direction and stops and the transfer conveyor does a continuous transfer in the conveyor running direction at a velocity lower than the velocity of the cutting conveyor.

Also, it is preferable that the bean sprout both end portions cutting and removing device according to the present invention is constructed comprising a bean sprouts arraying and supplying device by which the bean sprouts having their both end portions to be cut off and having their lengthwise directions orthogonally arrayed to the conveyor running direction are supplied in a dispersed state onto the cutting conveyor. Further, it is preferable that the bean sprout both end portions cutting and removing device is so constructed that a bean sprouts refining device is provided upstream of the bean sprouts arraying and supplying device for removing undergrown bean sprouts, broken short bean sprouts and bent bean sprouts from the bean sprouts to be treated.

In the bean sprout both end portions cutting and removing device according to the present invention, there are provided the cutting conveyor and the transfer conveyor both constructed as mentioned above and the bean sprouts transferred being placed on the cutting conveyor are caused to move on the cutters with the velocity difference between the cutting conveyor and the transfer conveyor. At this time, the bean sprouts have their both end portions caused to get into the interval formed between the blade portions of the adjacent cutters and the bean sprouts in this state are further moved by the transfer bars of the transfer conveyor. Thereby, the both end portions of the bean sprouts are cut off and removed.

As the root portions and sprouting portions as both end portions of the bean sprouts are slightly bent by nature from the stem main body portions, while the bean sprouts are being transferred on the cutters by the velocity difference between the cutting conveyor and the transfer conveyor, the bent both end portions easily get into the interval or gap formed between the blade portions of the adjacent cutters and are cut off by the cutters. In this way, according to the bean sprout both end portions cutting and removing device of the present invention, the natural shape of the bean sprouts in which the both end portions are slightly bent from the stem main body portions is made use of and the bean sprout both end portions are effectively cut off.

In the bean sprout both end portions cutting and removing device according to the present invention, the blade portion of the cutter may be employed from those blade portions formed by the combination of at least two blades out of the orthogonal blade, oblique blade and parallel blade, all relative to the cutter moving direction. Thereby, the both end portions of the bean sprouts of various shapes and various attitudes that have entered the gap maintained between the blade portions of the adjacent cutters can be securely cut off by any one of the orthogonal blade, oblique blade and parallel blade relative to the cutter moving direction.

In the bean sprout both end portions cutting and removing device according to the present invention so constructed that the cutting conveyor repeats transfers in the conveyor running direction and stops and the transfer conveyor does the continuous transfer in the conveyor running direction at the velocity lower than the velocity of the cutting conveyor, such a simple mechanism is employed as causes both of the cutting conveyor and transfer conveyor to do simple actions. Hence, the bean sprouts can have their both end portions securely removed by the simple mechanism.

In the bean sprout both end portions cutting and removing device according to the present invention constructed comprising the bean sprouts arraying and supplying device by which the bean sprouts having their both end portions to be cut off and having their lengthwise directions orthogonally arrayed to the conveyor running direction are supplied in the dispersed state onto the cutting conveyor as well as further comprising the bean sprouts refining device provided upstream of the bean sprouts arraying and supplying device for removing undergrown bean sprouts, broken short bean sprouts and bent bean sprouts from the bean sprouts to be treated, the bean spouts having approximately uniform lengths and having their lengthwise directions arrayed in parallel with the both side edges of the cutters fitted with the blade portions can be supplied and all the bean sprouts can have their both end portions snugly cut off and removed.

As another bean sprout both end portions cutting and removing device suitable for carrying out the bean sprout both end portions removing method according to the present invention, the present invention provides a bean sprout both end portions cutting and removing device, wherein the bean sprout both end portions cutting and removing device comprises an endless transfer conveyor, having upper and lower running paths, fitted with a plurality of bean sprouts receiving cells, each cell being formed with a sleeve shape having its both ends open and being arranged having its lengthwise direction vertically directed, continuously arranged in a row in a conveyor running direction, the bean sprout both end portions cutting and removing device further comprising in each of the upper and lower running paths of the transfer conveyor a bean sprout lower end portions receiving member for receiving lower end portions of the bean sprouts arranged with an interval maintained from lower end openings of the bean sprouts receiving cells and a cutter of which a cutting blade is positioned between the lower end openings of the bean sprouts receiving cells and the bean sprout lower end portions receiving member, and the bean sprouts having their lengthwise directions vertically arrayed are supplied into the bean sprouts receiving cells and transferred and end portions of the bean sprouts projecting between the lower ends of the bean sprouts receiving cells and the bean sprout lower end portions receiving member are cut off by the cutter.

It is preferable that the bean sprout both end portions cutting and removing device according to the present invention is constructed comprising a vibrator for vibrating any one of the bean sprout lower end portions receiving member and the bean sprouts receiving cells.

In the bean sprout both end portions cutting and removing device according to the present invention, the endless transfer conveyor is fitted with the bean sprouts receiving cells, each cell being formed with the sleeve shape having its both ends open and being arranged having its lengthwise direction vertically directed, and the bean sprouts having their lengthwise directions vertically arrayed are supplied into the bean sprouts receiving cells. While the transfer conveyor is being transferred, in each of the upper and lower running paths, the end portions of the bean sprouts projecting between the bean sprouts receiving cells and the bean sprout lower end portions receiving member are cut off by the cutter of which the cutting blade is positioned between the lower end openings of the bean sprouts receiving cells and the bean sprout lower end portions receiving member. Thereby, the end portions of the bean sprouts supplied into the bean sprouts receiving cells with their lengthwise directions vertically arrayed are cut off in the upper and lower running paths regardless of the root portions and sprouting portions in the respective end portions. Thus, the bean sprouts can have their both end portions securely cut off and removed.

Moreover, the bean sprout both end portions cutting and removing device according to the present invention is constructed with such a simple structure that there is provided the endless transfer conveyor, having the upper and lower running paths, fitted with the bean sprouts receiving cells of the sleeve shape having its both ends open, the cells being continuously arranged in the row in the conveyor running direction, and in each of the upper and lower running paths of the transfer conveyor, there are provided the bean sprout lower end portions receiving member for receiving the lower end portions of the bean sprouts arranged with the interval maintained from the lower end openings of the beans sprouts receiving cells and the cutter of which the cutting blade is positioned between the lower end openings of the bean sprouts receiving cells and the bean sprout lower end portions receiving member. Hence, actions to cut off the end portions of the bean sprouts can be securely carried out with less mechanical troubles.

In the bean sprout both end portions cutting and removing device according to the present invention constructed comprising the vibrator arranged below the bean sprouts receiving cells for vibrating any one of the bean sprout lower end portions receiving member and the bean sprouts receiving cells in the upward and downward direction or in the horizontal direction toward the lower end openings of the bean sprouts receiving cells, the end portions of the bean sprouts to be cut off can be arrayed on the bean sprout lower end portions receiving member by the vibrating force. Hence, the both end portions of the bean sprouts can be securely cut off by a predetermined length.

As a bean sprout both end portions cutting and removing device suitable for carrying out the bean sprout both end portions removing method according to the present invention, the present invention provides a bean sprout both end portions cutting and removing device, wherein the bean sprout both end portions cutting and removing device comprises a main conveyor provided with a plurality of bean sprouts receiving sections for receiving therein the bean sprouts having their lengthwise directions arrayed horizontally and orthogonally to a conveyor running direction, each of the sections having its lengthwise direction arranged horizontally and orthogonally to the conveyor running direction, the bean sprouts receiving sections being continuously arranged along the conveyor running direction, the bean sprout both end portions cutting and removing device further comprising a bean sprout end portions arraying member arranged on each side of the main conveyor with an interval maintained from a side edge of the main conveyor for receiving and arraying end portions of the bean sprouts supplied into the bean sprouts receiving sections, the end portions projecting from each side edge of the bean sprouts receiving sections, the bean sprout both end portions cutting and removing device further comprising a cutter arranged on each side of the main conveyor, and the projecting end portions of the bean sprouts are cut off by the cutter.

The bean sprout both end portions cutting and removing device according to the present invention may be so constructed that the bean sprout end portions arraying member is a bean sprout end portions arraying conveyor arranged on each side of the main conveyor with an interval maintained from the side edge of the main conveyor, the bean sprout end portions arraying conveyor being obliquely arranged relative to the conveyor running direction such that a downstream side of the bean sprout end portions arraying conveyor more approaches the main conveyor than an upstream side of the bean sprout end portions arraying conveyor and the cutter is arranged in the vicinity of a downstream end of the bean sprout end portions arraying conveyor and the end portions of the bean sprouts projecting from each side edge of the bean sprouts receiving sections are cut off by the cutter.

Also, in the bean sprout both end portions cutting and removing device according to the present invention, the bean sprouts receiving sections may be constructed being downwardly tilted to a direction of the bean sprout end portions arraying member or the bean sprout end portions arraying conveyor.

Also, in addition to this, in the bean sprout both end portions cutting and removing device according to the present invention, the bean sprout end portions arraying member or the bean sprout end portions arraying conveyor may be vibrated in a direction toward the side edge of the bean sprouts receiving sections.

Moreover, the bean sprout both end portions cutting and removing device according to the present invention may be so constructed that the main conveyor is constructed tiltably on both sides around a width directional central portion of the main conveyor and by tilting around the central portion, the bean sprouts receiving sections are downwardly tilted to a direction of the bean sprout end portions arraying member or the bean sprout end portions arraying conveyor.

Also, the bean sprout both end portions cutting and removing device according to the present invention may be so constructed that the bean sprout both end portions cutting and removing device comprises a water supply or air supply means for supplying water flow or air flow onto the bean sprouts receiving sections and by the water flow or air flow supplied onto the bean sprouts receiving sections, the bean sprouts in the bean sprouts receiving sections are displaced to a direction of the cutter and the end portions of the bean sprouts are cut off by the cutter.

In the bean sprout both end portions cutting and removing device according to the present invention, the bean sprouts receiving sections are continuously arranged on the main conveyor along the conveyor running direction having their lengthwise directions arranged laterally, that is, horizontally and orthogonally to the conveyor running direction, and the bean sprouts having their lengthwise directions arrayed likewise laterally are transferred by the water flow or the like to be supplied into the bean sprouts receiving sections.

The end portions of the bean sprouts received into the bean sprouts receiving sections project from each of the side edges of the bean sprouts receiving sections to be received and arrayed by the bean sprout end portions arraying member. Thus, the projecting end portions on both sides of the bean sprouts receiving sections are cut off by the cutters arranged on both sides of the main conveyor provided with the bean sprouts receiving sections. Thereby, the root portions and sprouting portions as both end portions of the bean sprouts can be cut off and removed. In the device of the present invention, the bean sprouts receiving sections having their lengthwise directions laterally arranged are used and the bean sprouts having their lengthwise directions likewise laterally arrayed are supplied into the bean sprouts receiving sections by the water flow or the like. Hence, without the arrayed state in the lengthwise direction being broken, the bean sprouts can be easily supplied into the bean sprouts receiving sections to have their both end portions cut off.

In the bean sprout both end portions cutting and removing device according to the present invention so constructed that the bean sprout end portions arraying member is the bean sprout end portions arraying conveyor arranged on each side of the main conveyor with the interval maintained from the side edge of the main conveyor, the bean sprout end portions arraying conveyor being obliquely arranged relative to the conveyor running direction such that the downstream side of the bean sprout end portions arraying conveyor more approaches the main conveyor than the upstream side of the bean sprout end portions arraying conveyor, the bean sprouts having their both end portions to be removed are supplied into the bean sprouts receiving sections and the end portions of the bean sprouts received into the bean sprouts receiving sections project from each of the side edges of the bean sprouts receiving sections to be received and arrayed by the bean sprout end portions arraying conveyor. Thus, the projecting end portions on both sides of the bean sprouts receiving sections are cut off at an appropriate position by the cutters and the both end portions of the bean sprouts can be easily removed.

In the bean sprout both end portions cutting and removing device according to the present invention so constructed that the bean sprouts receiving sections are downwardly tilted to the direction of the bean sprout end portions arraying member or the bean sprout end portions arraying conveyor, the bean sprouts in the bean sprouts receiving sections can be easily moved toward the bean sprout end portions arraying member or the bean sprout end portions arraying conveyor and the end portions of the bean sprouts are likewise easily arrayed. Also, in the device added with the construction that the bean sprout end portions arraying member or the bean sprout end portions arraying conveyor is vibrated in the direction toward the side edge of the bean sprouts receiving sections, the bean sprouts in the bean sprouts receiving sections can have their end portions easily arrayed by the vibration.

Moreover, in the bean sprout both end portions cutting and removing device according to the present invention so constructed that the main conveyor comprising the bean sprouts receiving sections is tiltable on both sides around the width directional central portion of the main conveyor, when the main conveyor is tilted around the central portion, the bean sprouts receiving sections are downwardly tilted to the direction of the bean sprout end portions arraying member or the bean sprout end portions arraying conveyor. Hence, such a device is provided that the bean sprouts in the bean sprouts receiving sections can be easily displaced toward the cutter for cutting of the end portions of the bean sprouts.

In the bean sprout both end portions cutting and removing device according to the present invention constructed comprising the water supply means for supplying the water flow onto the bean sprouts receiving sections or the air supply means for supplying the air flow onto the bean sprouts receiving sections, the water supply means or the air supply means generates the water flow or the air flow in the bean sprouts receiving sections. Thereby, the bean sprouts in the bean sprouts receiving sections are smoothly displaced toward the cutter for cutting of the end portions of the bean sprouts and the removal of the end portions of the bean sprouts can be appropriately carried out.

### BRIEF DESCRIPTION OF THE DRAWINGS

Figs. 1 (a) and (b) show an example of a bean sprouts separating device for carrying out a bean sprouts separating step of the present invention, wherein Fig. 1 (a) is a plan view and Fig. 1 (b) is a cross sectional view taken on line B-B of Fig. 1 (a).
Fig. 2 is a side view of the bean sprouts separating device of Figs. 1 (a) and (b).
Figs. 3 (a) and (b) show an example of a bean sprouts arraying device for carrying out a bean sprouts arraying step of the present invention, wherein Fig. 3 (a) is a plan view and Fig. 3 (b) is a cross sectional view taken on line B-B of Fig. 3 (a).
Fig. 4 is a side view of the bean sprouts arraying device of Figs. 3 (a) and (b).
Fig. 5 is a side view showing an example of a bean sprouts arraying and supplying device for carrying out the bean sprouts arraying step of the present invention.
Fig. 6 is a front view of the bean sprouts arraying and supplying device of Fig. 5.
Fig. 7 is a plan view of the bean sprouts arraying and supplying device of Fig. 5.
Fig. 8 is a side view showing an example of a bean sprout both end portions cutting and removing device for carrying out a bean sprout both end portions cutting and removing step of the present invention.
Fig. 9 is an enlarged plan view showing a cutting conveyor and a transfer conveyor both provided in the bean sprout both end portions cutting and removing device of Fig. 8.
Fig. 10 is a cross sectional view taken on line B-B of Fig. 9.
Fig. 11 is a cross sectional view taken on line C-C of Fig. 9.
Fig. 12 is a side view showing another example of the bean sprout both end portions cutting and removing device for carrying out the bean sprout both end portions cutting and removing step of the present invention.
Figs. 13 (a) and (b) are cross sectional views of the device of Fig. 12, wherein Fig. 13 (a) is a cross sectional view taken on line A-A of Fig. 12 and Fig. 13 (b) is a cross sectional view taken on line B-B of Fig. 12.
Fig. 14 is a plan view showing an arrangement state of a cutter 80 of Fig. 12.
Fig. 15 is a side view showing a variation example of the bean sprout both end portions cutting and removing device of Fig. 12.
Fig. 16 is a cross sectional view taken on line 16-16 of Fig. 15.
Fig. 17 is a plan view showing still another example of the bean sprout both end portions cutting and removing device for carrying out the bean sprout both end portions cutting and removing step of the present invention.
Fig. 18 is a plan view showing further another example of the bean sprout both end portions cutting and removing device for carrying out the bean sprout both end portions cutting and removing step of the present invention.
Figs. 19 (a) to (c) are explanatory views showing tilting states of a variation example of bean sprouts receiving sections 113 of Figs. 17 and 18.
Figs. 20 (a) to (c) are explanatory views showing cross sectional shapes of the bean sprouts receiving sections of Figs. 17 and 18.

### DESCRIPTION OF THE PREFERRED EMBODIMENTS

Herebelow, embodiments for carrying out the bean spout both end portions removing method according to the present invention will be concretely described with reference to appended drawings. In the bean sprout both end portions removing method of the present invention, the following steps are combined, that is, a bean sprouts separating step to separate and remove undergrown bean sprouts and short bean sprout fractions from bean sprouts as harvested, a bean sprouts arraying step to array lengthwise directions of the bean sprouts separated by the bean sprouts separating step and a bean sprout both end portions cutting and removing step to cut and remove both end portions of the bean sprouts arrayed by the bean sprouts arraying step. Herebelow, a pre-treating step will be first described and then embodiments of the bean sprouts separating step, bean sprouts arraying step and bean sprout both end portions cutting and removing step will be described in sequence.

### (Pre-treating step)

As bean sprouts as harvested include a considerable amount of impurities, such as shells, wastes, fine roots, etc., before they are applied with the bean sprout both end portions removing method of the present invention, it is preferable to previously remove such impurities. In order to remove the impurities, such as shells, wastes, fine roots, etc., from the bean sprouts as harvested, while various means including washing by water may be employed, it is preferable to effectively carry out the removal of fine roots, etc. for refining the bean sprouts by devices as disclosed by the Japanese laid-open patent applications 1998-136959 and 1999-318410 of the applicant here.

### (Separating step)

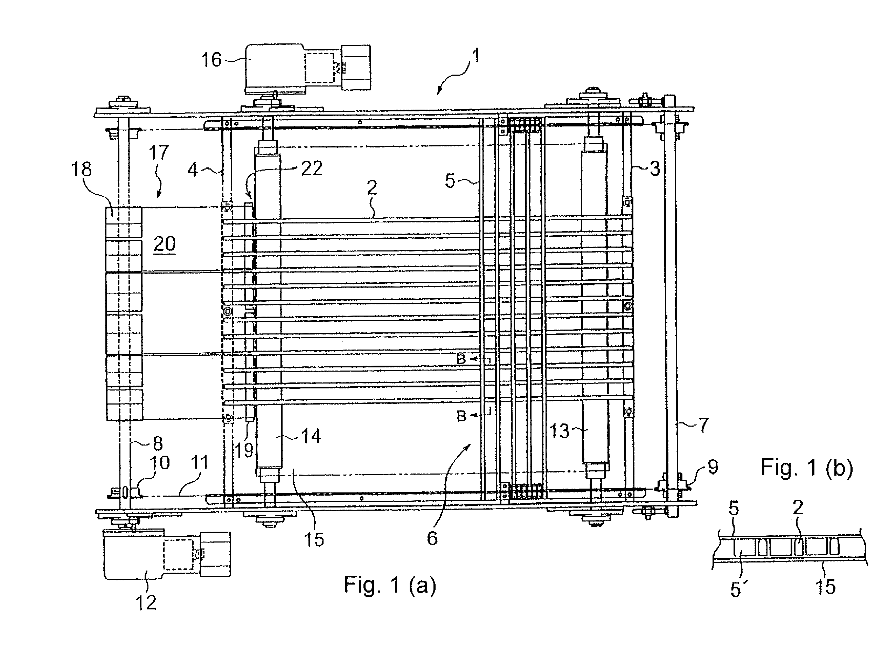

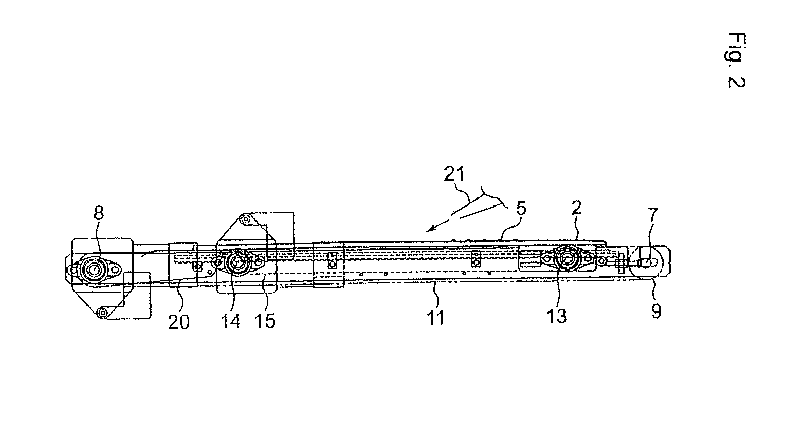

The bean sprouts applied with the pre-treatment are then applied with the bean sprouts separating step to separate and remove undergrown bean sprouts and short bean sprout fractions. An example of a separating device to carry out the bean sprouts separating step is shown in Figs. 1(a) and (b) and 2.

In Figs. 1(a) and (b) and 2, a bean sprouts separating device 1 comprises a plurality of longitudinal bars 2 arranged with an equal interval maintained between adjacent ones of them and fitted between two support bars 3, 4 and an endless bar conveyor 6 fitted with a plurality of lateral bars 5 arranged orthogonally to a lengthwise direction of the longitudinal bars 2 so that the lateral bars 5 run along the lengthwise direction of the longitudinal bars 2. The bar conveyor 6 comprises two shafts 7, 8 arranged with an interval maintained between them and having their respective both ends fitted with chain wheels 9, 10 and also comprises two endless chains 11 wound between the chain wheels 9, 10. The lateral bars 5 are arranged with an interval maintained between adjacent ones of them and have their respective both ends fitted to the two endless chains 11. The longitudinal bars 2 and lateral bars 5 have their respective cross sections or at least upper halves thereof formed with a circular shape or a rounded shape, such as an elliptical shape, so that the bean sprouts may not be caught on the bars. The lateral bars 5 have their respective lower faces fitted with a plurality of down fraction members 5' [Fig. 1(b)] arranged with a predetermined interval maintained between adjacent ones of the down fraction members 5' so that the down fraction members 5' are fitted in between adjacent ones of the longitudinal bars 2 and run with a small gap maintained between respective lower ends of the down fraction members 5' and a belt conveyor 15 to be described later.

The bar conveyor 6 is constructed such that when the shaft 8 is rotationally driven by a motor 12, an upper running path of the bar conveyor 6 is operated to run to the left from the right in Fig. 1(a). When the bar conveyor 6 is so operated, the lateral bars 5 are transferred while they are forming bottomless small box-like spaces, or lattice spaces, surrounded by the down fraction members 5' of the lateral bars 5 and the intersecting longitudinal bars 2 in the upper running path of the bar conveyor 6. That is, the longitudinal bars 2 and the bar conveyor 6 comprising the lateral bars 5 constitute a lattice conveyor that is transferred forming the lattice spaces in a bean sprouts separating device of the present invention.

Below the lattice conveyor, the belt conveyor 15 is arranged with a small gap maintained between the lattice conveyor and the belt conveyor 15. That is, the belt conveyor 15 is constructed comprising two rollers 13, 14 arranged with an interval maintained between them and an endless belt wound between the two rollers 13, 14. When the roller 14 is rotationally driven by a motor 16, an upper running path of the belt conveyor 15 is operated to run to the left from the right in Fig. 1(a). Running velocity of the belt conveyor 15 is set lower than running velocity of the bar conveyor 6 so that by a velocity difference between them, undergrown bean sprouts and bean sprouts shorter than a predetermined length can securely fall down on the belt conveyer 15 below from the lattice conveyor to be separated and removed.

The small gap maintained between the lattice conveyor and the belt conveyor 15 is selected to have such a size that while undergrown bean sprouts and broken short bean sprouts are caused to fall down on the belt conveyor 15 from the lattice conveyor, bean sprouts of the predetermined length or more unnecessary to be separated and removed that have once abutted on the down fraction members 5' of the lateral bars 5 remain without falling down on the belt conveyor 15 and are transferred together with the running bar conveyor 6. Also, while the size of the lattice space of the lattice conveyor is appropriately selected according to the size of the bean sprouts to be separated, as an example thereof, one side of the box-like space is set to 3 to 4 cm.

Numeral 17 designates a delivery belt conveyor for discharging separated bean sprouts from which the undergrown bean sprouts, etc. have been separated and removed by the lattice conveyor. This delivery belt conveyor 17 comprises an endless belt 20 wound between a roll 18 fitted to the shaft 8 and a roll 19.

A gap 22 is formed between the belt conveyor 15 and the endless belt 20 and the undergrown bean sprouts, etc. separated onto the belt conveyor 15 are caused to fall down from the gap 22. It is to be noted that the bean sprouts to be applied with the separating step are supplied in a dispersed state onto the lattice conveyor from an appropriate hopper or the like (not shown) at the right side end of the lattice conveyor in Fig. 1(a).

Numeral 21 (Fig. 2) designates an air blowing port of a blower. This air blowing port 21 functions to blow air onto the lattice conveyor so that the undergrown bean sprouts and short bean sprouts to be separated and removed, that are caught or entangled on the longitudinal bars 2 and lateral bars 5 of the lattice conveyor, are caused to fall down onto the belt conveyor 15 below from the lattice conveyor.

In the separating device of the present embodiment constructed as mentioned above, separation of the bean sprouts by this device is carried out as follows:

Bean sprouts as harvested from which undergrown bean sprouts, etc. are to be separated and removed are supplied in the dispersed state onto the right side end in the figure of the lattice conveyor from the hopper or the like and transferred being placed in the dispersed state on the lattice conveyor comprising the longitudinal bars 2 and lateral bars 5. Air is blown onto the lattice conveyor from the air blowing port 21 of the blower and thereby the undergrown bean sprouts and broken short bean sprouts of the size that can pass through the lattice spaces of the lattice conveyor are caused to fall down onto the below running belt conveyor 15 and separated. Even if the bean sprouts of the length unnecessary to be separated enter the lattice spaces, on one hand, they can be received on the belt conveyor 15 running with the small gap maintained below the lattice conveyor and, on the other hand, they can abut on the down fraction members 5' of the lateral bars 5. Hence, as a whole, they do not fall down but are transferred together with the lattice conveyor. Thus, the bean sprouts from which the undergrown bean sprouts and the bean sprouts shorter than a predetermined length have been removed are discharged from the delivery belt conveyor 17 at the left side end in the figure. The undergrown bean sprouts, etc. separated onto the belt conveyor 15 are caused to fall down from the gap 22 between the belt conveyor 15 and the endless belt 20 and discharged.

It is to be noted that, in the embodiment as illustrated, while the lattice conveyor comprises the bar conveyor 6 and the stationary longitudinal bars 2, the lattice conveyor may be constructed by a conveyor comprising previously assembled lattice spaces. Also, in the embodiment as illustrated, while the lattice conveyor comprising the longitudinal bars 2 and lateral bars 5 has been described as having a fixed size of the lattice space, the lattice conveyor may be constructed such that either one of the interval between each of the longitudinal bars 2 and the interval between each of the lateral bars 5 or both of them are changeable so that the size or length of the bean sprouts to be separated can be selected, as there are differences in shape, length, thickness, etc. of the bean sprouts according to raw material beans and growing conditions. Also, it is preferable that the gap between the lattice conveyor and the belt conveyor 15 therebelow is adjustable.

Moreover, in the device of the embodiment as illustrated, while the lattice conveyor has been described as comprising the stationary longitudinal bars 2 and the simply running lateral bars 5, at least one of the longitudinal bars 2 and the lateral bars 5 may be vibrated by a vibrator or rotated around respective lengthwise directional axes so that the undergrown bean sprouts, etc. to be separated, that are caught on the lattice conveyor or the like, are assisted to fall down from the lattice spaces.

Also, while the bean sprouts to be separated and removed are prevented from remaining on the lattice conveyor by the air blowing from the blower, a construction to scrape down the bean sprouts by a brush may instead be employed.

### (Bean sprouts arraying step)

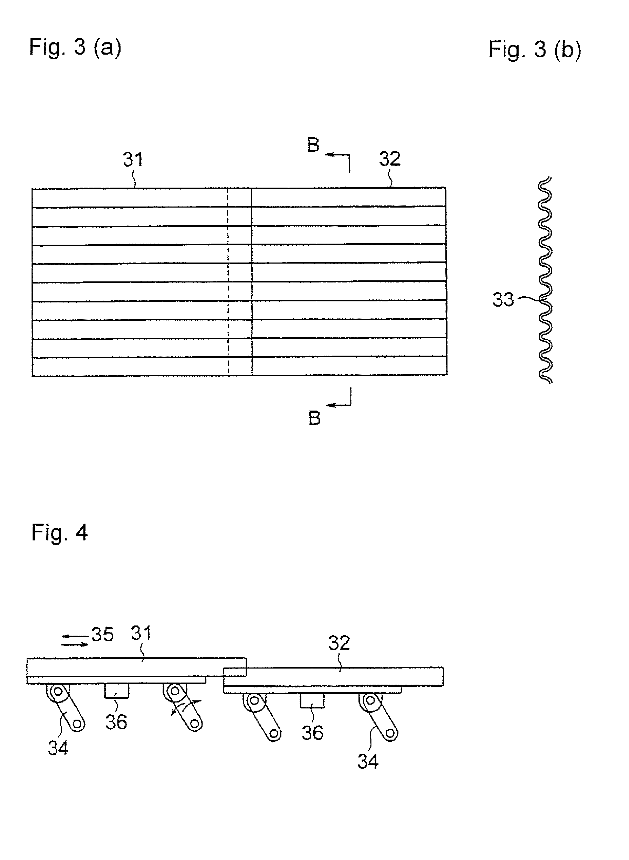

The bean sprouts from which the undergrown bean sprouts and the bean sprouts shorter than a predetermined length have been separated and removed are then applied with the bean sprouts arraying step to array the bean sprouts along a lengthwise direction of the bean sprouts. An example of a device carrying out the bean sprouts arraying step is shown in Figs. 3(a) and (b) and 4.

The device shown in Figs. 3(a) and (b) and 4 comprises grooved plates 31, 32 of two stages arranged in line. The respective grooved plates 31, 32 are provided with longitudinal grooves 33 arranged in parallel with each other, as shown in the cross sectional view of Fig. 3(b), so that the bean sprouts supplied onto the grooved plate 31 are sent along the longitudinal grooves 33 to the right from the left in Fig. 3(a) on the grooved plates 31, 32 arranged in line. The grooved plates 31, 32 can be formed with an interval between each of the longitudinal grooves 33 of 1 to 3cm and a depth of a crest of 1 to 3cm and also, if necessary according to the bean sprouts to be treated, can be constructed so as to be sloped with an angle of 5 to 30° toward a direction to which the bean sprouts placed on the grooved plates 31, 32 are to be sent, that is, toward the right from the left in Figs. 3(a) and 4. Moreover, in order for the bean sprouts on the grooved plates 31, 32 to be transferred, if such a construction that a water or air flow supply means is provided for supplying water flow or air flow along the longitudinal grooves 33 of the grooved plates 31, 32 is employed, then the transfer of the bean sprouts on the grooved plates 31, 32 can be smoothly carried out and also shells, hairy roots, wastes, etc. separated from the bean sprouts and caught on the grooved plates 31, 32 can be removed.

The grooved plates 31, 32 are supported by arms 34 that are pivotally provided so as to be displaceable in the horizontal direction as shown by arrows 35 in Fig. 4 and vibrated with horizontal directional components by vibrational forces given by vibrators 36 fitted to the grooved plates 31, 32. As for an amplitude and frequency of the vibration having the horizontal directional components, appropriate values thereof can be employed according to the bean sprouts to be treated. Hence, it is preferable that the vibrator 36 is of a type in which the amplitude and frequency are adjustable. By the vibration having the horizontal directional components, the bean sprouts on the grooved plates 31, 32 are moved along the longitudinal grooves 33 of the grooved plates 31, 32 and in the course of this movement, the bean sprouts on the grooved plates 31, 32 are caused to fall down into the longitudinal grooves 33 of the grooved plates 31, 32 and are arrayed to be arranged along the lengthwise direction of the longitudinal grooves 33.

In the device of the present embodiment constructed as mentioned above, while the bean sprouts are being transferred on the grooved plates 31, 32, they fall down into the longitudinal grooves 33 of the grooved plates 31, 32 and are at the same time arrayed along the lengthwise direction in the longitudinal grooves 33. The bean sprouts so arrayed along the lengthwise direction are transferred and delivered from the right side end in Figs. 3(a) and 4 as they are so arrayed along the lengthwise direction, wherein they are transferred and delivered being assisted, if necessary, by the water flow or air flow along the longitudinal grooves 33.

It is to be noted that if bent bean sprouts are included in the bean sprouts so transferred on the grooved plates 31., 32, the bent bean sprouts are transferred as they are placed on the crest portions or top portions of the longitudinal grooves 33 and this causes irregularity in arraying the bean sprouts. Hence, such bent bean sprouts are preferable to be removed. For this purpose, although not illustrated, it is preferable to provide a bent bean sprouts removing means, such as a chain, brush, blade, etc., that is arranged making contact with the crest portions of the grooved plates 31, 32 or with a small gap maintained from the crest portions.

Also, in the device of the present embodiment, while the grooved plates 31, 32 comprise the longitudinal grooves 33 having their cross sections formed with a rounded shape, the cross sections of the longitudinal grooves 33 may also be formed with a square shape, triangular shape or the like.

Moreover, in the device of the present embodiment, while the grooved plates are arranged with two stages in line, the number of the stages may be only one, or three or more. Also, the grooved plates may be arranged horizontally or sloped toward the supply direction.

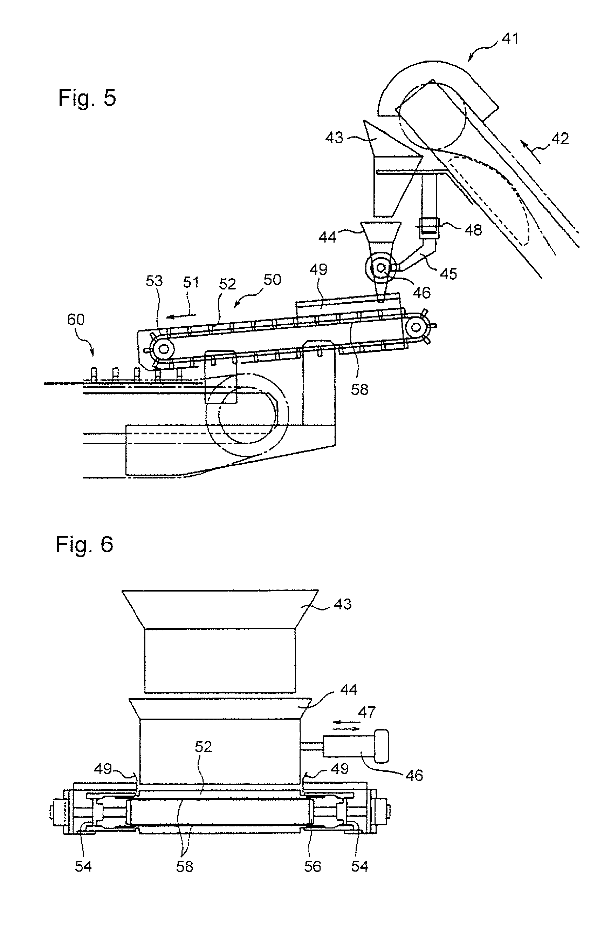

Next, a bean sprouts arraying device of another embodiment will be described with reference to Figs. 5 to 7 illustrating an entire construction of the device.

In Figs. 5 to 7, numeral 41 designates a scraping-up conveyor constructed such that one or more scraping-up plates in which a multiplicity of needle members are implanted are moved by an endless chain in a direction shown by arrow 42. By this scraping-up conveyor 41, bean sprouts to be treated are scraped up from a storage place (not shown) at the right side lower position in Fig. 5 to be transferred obliquely upwardly. The bean sprouts so scraped up and transferred by the scraping-up conveyor 41 are supplied in a dispersed state into a hopper 44 below from a top end of the scraping-up conveyor 41 via an intermediate hopper 43.

These hoppers 43, 44 have their respective horizontal directional cross sections formed with a flat rectangular shape, wherein a major side (longer side) is arranged along a direction orthogonal to the plane of the figure and a minor side (shorter side) is arranged along the right and left direction in the figure. The minor side is of a length shorter than an average length of the bean sprouts to be treated. The hopper 44 is supported to a device frame by an arm 45 to be flexibly displaceable. When a vibrator 46 is operated, the hopper 44 is vibrated along a direction of the major side of the hopper 44 (that is, in directions of arrows 47 in Fig. 6) around a point of support 48 (Fig. 5).

The bean sprouts scraped up from the storage place by the scraping-up conveyor 41 are caused to fall down into the intermediate hopper 43 from the top end of the scraping-up conveyor 41. The bean sprouts in the intermediate hopper 43 are laterally dispersed along the horizontal cross sectional rectangular shape of the intermediate hopper 43 and also have their lengthwise directions arrayed in a direction along the major side of the rectangular shape. Thus, the bean sprouts further fall down into the hopper 44 below.

The bean sprouts received into the hopper 44 have their lengthwise directions further surely laterally arrayed along the cross sectional rectangular shape of the hopper 44 and fall down from a discharge port of the lower end. That is, as the hopper 44 is vibrated in the directions of the arrows 47 (the right and left directions in Fig. 6) along the major side of the cross sectional shape of the hopper 44 by vibrational forces of the vibrator 46 having horizontal directional components, the bean sprouts in the hopper 44 have their lengthwise directions securely arrayed to be directed along the major side of the hopper 44 and fall down from the discharge port of the lower end.

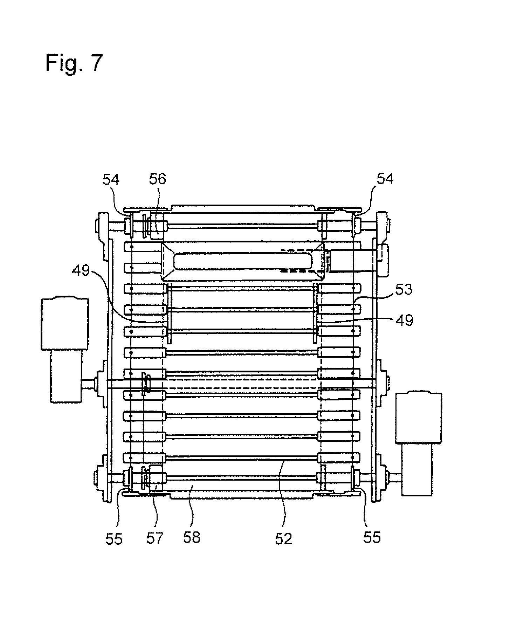

A conveyor 50 is arranged below the hopper 44 to run in a direction of arrow 51. The conveyor 50 comprises a chain conveyor constructed by an endless chain 53 and also comprises an endless belt conveyor 58 arranged on the inner side of this chain conveyor. The endless chain 53 is fitted with a plurality of partitions 52 that are risingly provided intersecting the direction of the arrow 51 with an interval maintained between adjacent ones of the partitions 52. The endless chain 53 is wound between sprockets 54, 55 (Fig. 7) and the belt conveyor 58 between rollers 56, 57. The interval between adjacent ones of the partitions 52 of the chain conveyor is set shorter than an average length of the bean sprouts to be treated and a height of the partitions 52 is 1cm, for example.

In this way, in a running plane of the conveyor 50, by the partitions 52 of the chain conveyor and the belt conveyor 58, rectangular receiving spaces of which major sides are arranged along the direction orthogonal to the plane of Fig. 5, like the discharge port of the hopper 44, are formed. These receiving spaces run along the direction orthogonal to the partitions 52. The partitions 52 of the chain conveyor are operated to run at a velocity higher than that of the belt conveyor 58 so that the bean sprouts placed on the belt conveyor 58 are transferred while they are slided and rolled on the belt conveyor 58 by the partitions 52 operated faster than the belt conveyor 58. This functions to array the lengthwise directions of the bean sprouts in the direction along the partitions 52. Numeral 49 (Fig. 6) designates a guide plate that is provided rising on both sides of the conveyor 50 at the position below the discharge port of the hopper 44 by which the bean sprouts falling down from the hopper 44 are prevented from leaping out aside.

Above the conveyor 50, it is preferable to provide a smoothing member (not shown), such as a brush arranged with a small gap maintained from upper ends of the partitions 52, a blade reciprocated along a guide in the direction intersecting the conveyor 50 or the like. The smoothing member functions to cause the bean sprouts supplied from the hopper 44 and caught on the partitions 52 to fall down into the receiving spaces formed by and between the partitions 52 to be received therein having their lengthwise directions arrayed. Downstream of the conveyor 50, a bean sprout both end portions cutting and removing device 60, as will be described later, to which the bean sprouts treated as mentioned above are to be supplied is arranged.

In the bean sprouts arraying device of the present embodiment constructed as mentioned above, the bean sprouts scraped up from the not shown storage place by the scraping-up conveyor 41 have their lengthwise directions arrayed by the hoppers 43, 44 along the direction of the hopper cross sectional major side or along the direction orthogonal to the plane of Fig. 5 and supplied onto the conveyor 50 from the lower end of the hopper 44. The belt conveyor 50 comprises the chain conveyor on which the partitions 52 are risingly provided and the belt conveyor 58 running below the chain conveyor. By the partitions 52 and belt conveyor 58, the rectangular receiving spaces of which the major side is arranged along the direction orthogonal to the plane of Fig. 5 are formed and the bean sprouts supplied onto the conveyor 50 are received into the receiving spaces. As there is a velocity difference between the partitions 52 and the belt conveyor 58, the bean sprouts received into the receiving spaces formed by the partitions 52 and belt conveyor 58 are transferred on the belt conveyor 58 by the partitions 52 and the bean sprouts have their lengthwise directions arrayed in the direction along the partitions 52. That is, the lengthwise directions of the bean sprouts are arrayed along the lengthwise direction of the receiving spaces or along the direction orthogonal to the plane of Fig. 5. The bean sprouts of which the lengthwise directions are so arrayed are sent to the next packaging step or other treating steps.

In the foregoing, while the bean sprouts arraying device of the present invention has been concretely described based on the embodiments as illustrated, it is a matter of course that the bean sprouts arraying device of the present invention is not limited to the embodiments as mentioned above. For example, in the above-mentioned embodiment, while the hoppers 43, 44 have their horizontal directional cross sections formed with the flat rectangular shape, this shape may be other flat shapes, such as an elliptical shape or the like. Also, in the above-mentioned embodiment, while the hopper 44 is vibrated in the directions of arrows 47 along the major side of the cross section of the hopper 44 (in the right and left directions in Fig. 6) by the vibrational force having the horizontal directional vibration components given by the vibrator 46, the hopper may be vibrated not necessarily in the direction along the major side but in an appropriate direction, such as along the minor side, by the vibrational force having the horizontal directional vibration components.

Moreover, in the above-mentioned embodiment, while the intermediate hopper 43 is not vibrated, it may be vibrated as in the case of the hopper 44. Also, while the conveyor 50 is constructed comprising the chain conveyor having the chain 43 fitted with the plurality of partitions 52 and the belt conveyor 58 arranged on the inner side of the chain conveyor and the chain conveyor is operated to run faster than the belt conveyor 58 so that the bean sprouts have their lengthwise directions arrayed on the belt conveyor 58, the conveyor may be a single conveyor fitted with the plurality of partitions 52.

### (Both end portions cutting and removing step)

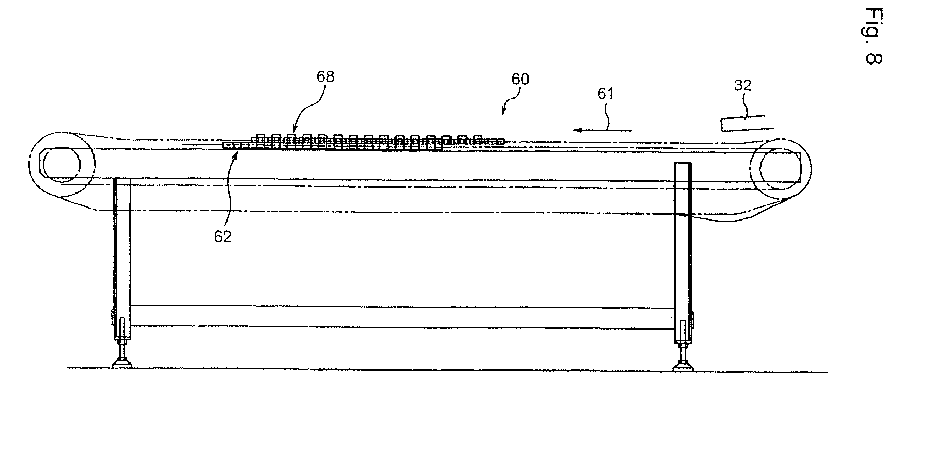

The bean sprouts having their lengthwise directions arrayed by the bean sprouts arraying step as mentioned above are then applied with the bean sprout both end portions cutting and removing step by which root portions and sprouting portions as both end portions of the bean sprouts are cut off and removed. Four examples of a bean sprout both end portions cutting and removing device (hereafter simply referred to as a cutting device) carrying out the bean sprout both end portions cutting and removing step are shown in Figs. 8 to 20.

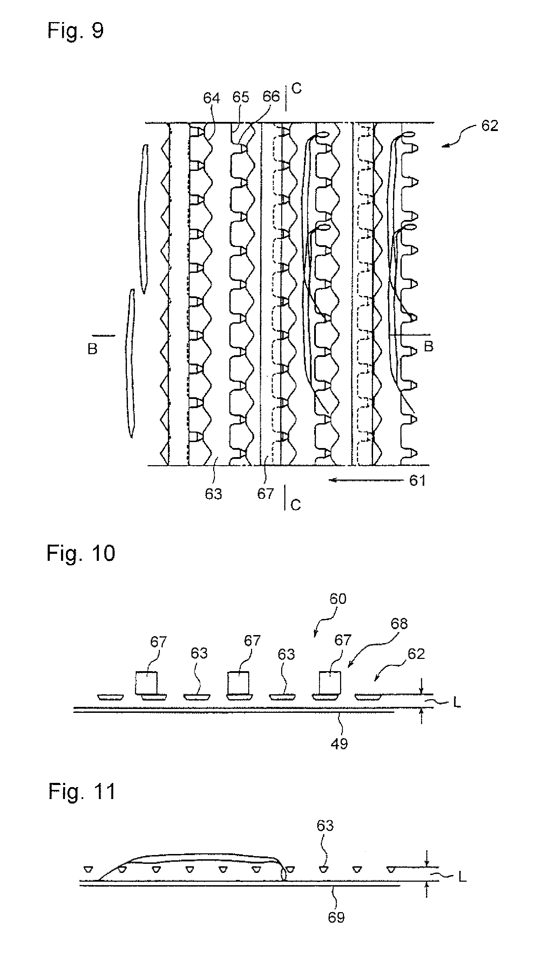

First, a cutting device 60 will be described with reference to Figs. 8 to 11. In Fig. 8, the cutting device 60 comprises a cutting conveyor 62 constructed as an endless conveyor to be transferred in a conveyor running direction shown by arrow 61. The cutting conveyor 62 comprises endless chains fitted with both ends of a plurality of cutters arranged laterally, that is, horizontally and orthogonally to the conveyor running direction. Construction of the cutting conveyor 62 will be described next with reference to Figs. 9 and 10. The cutting conveyor 62 comprises the plurality of cutters 63 and each of the cutters 63 is formed with an elongated shape, as shown in a plan view of Fig. 9, comprising three kinds of blades, that is, blades 64 of a serrated shape forming oblique blades relative to the conveyor running direction, blades 65 forming orthogonal blades relative to the conveyor running direction and blades 66 forming parallel blades relative to the conveyor running direction. That is, the cutters 63 so formed with the blades 64 to 66 are arranged orthogonally to the running direction of the arrow 61 of the cutting conveyor 62 and have their both ends fitted to the endless chains so that the endless cutting conveyor 62 is formed. An interval is maintained between each of the cutters 63 so that spaces are formed there and both ends of the bean sprouts to be cut off get into the spaces, as will be described later.

The cutting device 60 comprises, in addition to the above-mentioned cutting conveyor 62, a transfer conveyor 68 that has a plurality of transfer bars 67. The transfer conveyor 68 is constructed by endless chains fitted with both ends of the transfer bars 67 arranged laterally with an interval maintained between each of the transfer bars 67. The transfer bars 67 of the transfer conveyor 68 are constructed, as shown in Fig. 10, to be transferred above the cutters 63 of the cutting conveyor 62 with a small gap maintained from upper surfaces of the cutters 63, that is, with a small gap maintained relative to the cutting conveyor 62. Also, the cutting device 60 comprises a bottom plate 69 arranged with an interval L maintained below the cutting conveyor 62. This interval L between the cutting conveyor 62 and the bottom plate 69 has an important meaning for efficiently cutting both end portions of the bean sprouts, as will be described later.

In the cutting device 60 comprising the cutting conveyor 62, transfer conveyor 68 and bottom plate 69, as mentioned above, the cutting conveyor 62 is operated to repeat transfers in the conveyor running direction of the arrow 61 and stops and the transfer conveyor 68 is operated to do a continuous transfer in the conveyor running direction of the arrow 61 at a velocity lower than a transfer velocity of the cutting conveyor 62. While the bottom plate 69 is constructed by a stationary plate, it is preferable that the bottom plate is constructed by an endless belt conveyor so that both end portions of the bean sprouts cut off by the cutting conveyor 62 and falling down are received thereon and discharged.

Function of the cutting device 60 constructed as mentioned above will be described next.

The bean sprouts having their lengthwise directions arrayed along the longitudinal grooves 33 of the grooved plates 31, 32 in the bean sprouts arraying device as shown in Figs. 3 and 4, for example, are supplied onto the cutting device 60 from the end of the grooved plate 32. That is, the bean sprouts having their lengthwise directions arrayed and laid down along the direction orthogonal to the plane of Fig. 8, or arrayed and laid down along the lengthwise direction of the cutters 63, like the bean sprouts schematically shown in Fig. 9, are supplied onto the cutting device 60. In the cutting device 60, the cutting conveyor 62 is operated to repeat transfers in the conveyor running direction shown by the arrow 61 and stops and the transfer conveyor 68 is operated to do the continuous transfer in the conveyor running direction shown by the arrow 61 at the velocity lower than the transfer velocity of the cutting conveyor 62. Thereby, a relative movement is generated due to the difference of the transfer velocity between the cutting conveyor 62 and the transfer conveyor 68. Hence, the bean sprouts placed on the cutting conveyor 62 are moved, while sliding or rolling on the cutting conveyor 62, at a relative velocity. While the bean sprouts are so moved on the cutting conveyor 62, their bent both ends get into the spaces formed between the blades of adjacent cutters 63 and, in this state, are moved by the relative movement between the cutting conveyor 62 and the transfer conveyor 68. Thus, the root portions and sprouting portions as both ends of the bean sprouts that have got into the spaces are cut off by the blades of the cutters 63.

While the bean sprouts have their both end portions cut off by the portions getting in the spaces formed between the cutters 63, as schematically shown in Fig. 11, as the bottom plate 69 is arranged below the cutters 63 of the cutting conveyor 62, the portions of both ends of the bean sprouts beyond the interval L between the cutter 63 (or the cutting conveyor 62) and the bottom plate 69 are prevented from getting into the spaces and the bean sprouts are prevented from being excessively cut off. Also, even if the bean sprouts of which both end portions have bean already cut off get into the spaces formed between the cutters 63, the length to be cut off by the cutters 63 can be suppressed short. Thus, the bean sprouts that have their both end portions cut off, like the bean sprouts shown at the left side end of Fig. 9, are discharged from a final end of the cutting conveyor 62.

In the cutting device of the present embodiment as illustrated, while the cutters of the cutting conveyor comprise the blades of three kinds, that is, the orthogonal blades, oblique blades and parallel blades relative to the conveyor running direction, the blades are not limited to the blades of these three kinds but may be employed from various types according to the bean sprouts to be treated, such as blades in which two kinds out of the above-mentioned three kinds are combined, blades of the orthogonal blades only, blades of the oblique blades only, blades formed with a wave shape, etc. Also, it is preferable that the blades of the cutters 63 are formed with projections that project toward the adjacent cutter, like the cutters 63 of the present embodiment as illustrated, so that the bean sprouts laterally laid down on the cutting conveyor may not fall down into laterally elongated spaces formed between adjacent ones of the cutters 63.

Moreover, in the cutting device of the present embodiment as illustrated, while the relative movement between the cutting conveyor 62 and the transfer conveyor 68 is generated by the construction in which the cutting conveyor 62 carries out the transfers and stops and the transfer conveyor 68 carries out the continuous transfer at the velocity lower than the transfer velocity of the cutting conveyor 62, the means to generate the relative movement between the cutting conveyor 62 and the transfer conveyor 68 is not limited thereto.

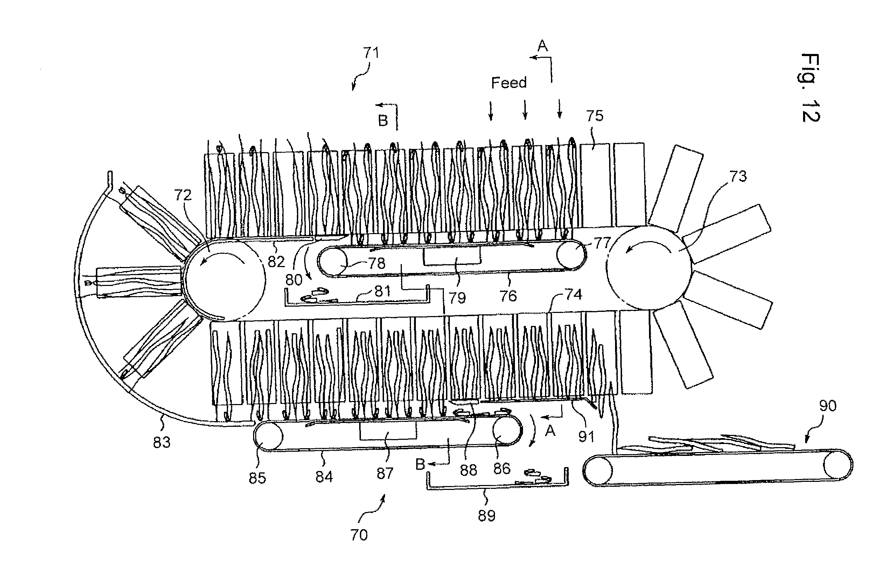

Next, a cutting device 70 will be described with reference to Figs. 12 to 14.

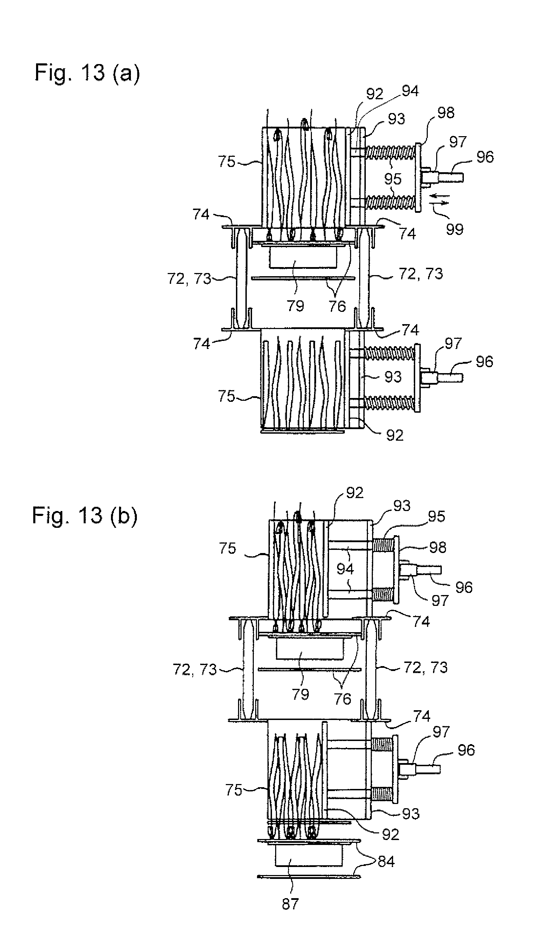

In Figs. 12 and 13 (a) and (b), numeral 71 designates a transfer conveyor. This transfer conveyor 71 comprises two endless chain belts 74 wound between two chain wheels 72, 73 and a plurality of bean sprouts receiving cells 75, each cell being formed with a sleeve shape having its both ends open. The bean sprouts receiving cells 75 are continuously arranged in a row on the transfer conveyor 71 along a running direction thereof and have its one end fitted to the chain belts 74 so that their lengthwise directions are vertically arranged to rise on the transfer conveyor 71. The transfer conveyor 71 is operated to run by rotation in arrow directions of the chain wheels 72, 73.

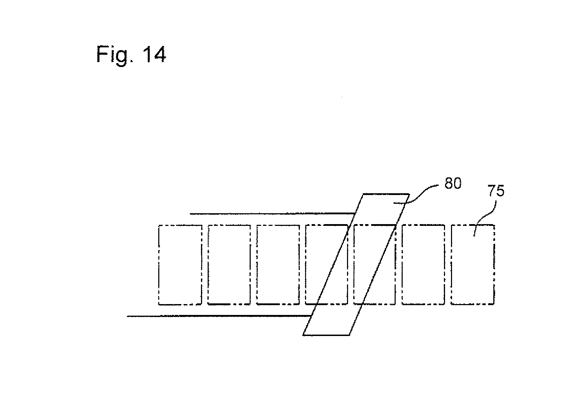

In an upper running path of the transfer conveyor 71 and with an interval maintained from lower end openings of the bean sprouts receiving cells 75, a bean sprout lower end portions receiving conveyor 76 as a bean sprout lower end portions receiving member of the present invention is arranged for receiving lower end portions of the bean sprouts projecting from the lower end openings of the bean sprouts receiving cells 75. The bean sprouts lower end portions receiving conveyor 76 is wound between two pulleys 77, 78 and can be vibrated in the vertical or horizontal direction by a vibrator 79. Downstream of the bean sprout lower end portions receiving conveyor 76, a blade type cutter 80 is arranged in which a blade is obliquely arranged relative to the running path of the transfer conveyor 71, as shown in Fig. 14, at a position between the lower end openings of the bean sprouts receiving cells 75 and the bean sprout lower end portions receiving conveyor 76. Numeral 81 designates a bean sprout end portions receiver for receiving end portions of the bean sprouts cut off by the cutter 80 and numeral 82 a bean sprout lower ends receiver for receiving ends of the bean sprouts from which the lower end portions have been cut off and removed.

At a position where the transfer conveyor 71 begins to turn around the chain wheel 72 and enters a lower running path thereof, an inverted bean sprouts receiving member 83 is arranged along an inverting track of upper ends of the bean sprouts receiving cells 75. The inverted bean sprouts receiving member 83 functions to receive lower end portions of the bean sprouts in the bean sprouts receiving cells 75 that are turned upside down by the inversion. At a position of a final end of the inverted bean sprouts receiving member 83, a bean sprout lower end portions receiving conveyor 84 as a bean sprout lower end portions receiving member of the present invention is arranged for receiving lower end portions of the bean sprouts projecting from lower end openings of the bean sprout receiving cells 75. The bean sprout lower end portions receiving conveyor 84 is wound between two pulleys 85, 86 and can be vibrated in the vertical or horizontal direction by a vibrator 87. Downstream of the bean sprout lower end potions receiving conveyor 84, a blade type cutter 88, like the cutter 80, is arranged in which a blade is obliquely arranged relative to the running path of the transfer conveyor 71 at a position between lower end openings of the bean sprouts receiving cells 75 and the bean sprout lower end portions receiving conveyor 84. Thus, in the lower running path of the transfer conveyor 71, when the bean sprouts come to the position where the cutter 88 is arranged, lower end portions of the bean sprouts projecting from the lower end openings of the bean sprouts receiving cells 75 to the bean sprout lower end portions receiving conveyor 84 are cut off by the cutter 88. Numeral 89 designates a bean sprout end portions receiver for receiving end portions of the bean sprouts cut off by the cutter 88, numeral 90 a delivery conveyor for delivering the bean sprouts of which both end portions have been cut off and removed and numeral 91 a bean sprout lower ends receiver for receiving lower ends of the bean sprouts from which the lower end portions have been cut off and removed.

As shown in Figs. 13 (a) and (b), in each of the bean sprouts receiving cells 75, a side plate 93 and a movable side plate 92 are provided, wherein the movable side plate 92 is arranged on the inner side of the side plate 93 to be movable while it is maintained in parallel with the side plate 93. The movable side plate 92 is connected to a pusher plate 98 via a connecting bar 94. The connecting bar 94 is fitted with a spring 95 that is positioned between the side plate 93 and the pusher plate 98 so as to function to separate the pusher plate 98 from the side plate 93. Numeral 96 designates a cam plate arranged on a side of the running path of the bean sprouts receiving cell 75 and numeral 97 a cam roller fitted to the pusher plate 98 rotatably around a vertical axis. The cam roller 97 abuts on the cam plate 96 to be displaceable in directions of arrows 99 corresponding to the shape of the cam plate 96. Configuration of the cam plate 96 is formed so as to displace the cam roller 97 as follows. That is, at positions on the right side upper portion of Fig. 12 where the bean sprouts to be treated are fed into the bean sprouts receiving cells 75 and on the right side lower portion of Fig. 12 where the bean sprouts having their both end portions cut off are delivered from the bean sprouts receiving cells 75, the cam roller 97 is displaced so that the movable side plate 92 approaches the side plate 93 and a space to receive the bean sprouts in the bean sprouts receiving cell 75 is widened, as shown in Fig. 13 (a). Also, at positions of the cutters 80, 88 in Fig. 12 where the bean sprouts have their end portions cut off by the cutters 80, 88, the cam roller 97 is displaced so that the movable side plate 92 separates from the side plate 93 and the space in the bean sprouts receiving cell 75 is narrowed, as shown in Fig. 13 (b). In the state of Fig. 13 (b), the bean sprouts in the bean sprouts receiving cell 75 are thickly gathered and cutting by the cutters can be facilitated.

In the cutting device 70 as described above, the bean sprouts receiving cells 75 are supplied with the bean sprouts that have their lengthwise directions arrayed by the bean sprouts arraying device as shown in Figs. 3 and 4, for example, wherein the bean sprouts so supplied have their lengthwise directions vertically arranged to be received into the bean sprouts receiving cells 75. The bean sprouts so vertically received into the bean sprouts receiving cells 75 have their lower end portions projected from the bottoms of the bean sprouts receiving cells 75 to be received on the bean sprout lower end portions receiving conveyor 76 that is arranged with an interval maintained from the lower end openings of the bean sprouts receiving cells 75. Thus, the bean sprouts supported rising on the bean sprout lower end portions receiving conveyor 76 are transferred together with the conveyor. When the bean sprouts are transferred to the position where the cutter 80 is arranged, the movable side plate 92 is moved to the position shown in Fig. 13 (b) by the displacement of the cam roller 97 abutting on the cam plate 96. The bean sprouts in the bean sprouts receiving cells 75 are thereby thickly gathered and the lower end portions of the bean sprouts projecting from the lower end openings of the bean sprouts receiving cells 75 to be received on the bean sprout lower end portions receiving conveyor 76 are cut off by the cutter 80 provided at the appropriate height position. The bean sprouts remaining in the bean sprouts receiving cells 75 after having their lower end portions cut off by the cutter 80 have then their cut lower ends supported on the bean sprout lower ends receiver 82 arranged below the lower end openings of the bean sprouts receiving cells 75 and are transferred in this state.

The transfer conveyor 71 is turned around the chain wheel 72 to enter the lower running path and the bean sprouts receiving cells 75 are thereby turned upside down (inverted). In the inverting path of the bean sprouts receiving cells 75, the inverted bean sprouts receiving member 83 is arranged along the inverting track of the upper ends of the bean sprouts receiving cells 75 to receive the bean sprouts in the bean sprouts receiving cells 75 that are being turned upside down by the inversion. After the inversion, the lower ends of the bean sprouts projecting from the lower end openings of the bean sprouts receiving cells 75 are received on the bean sprout lower end portions receiving conveyor 84 and the bean sprouts are transferred in this state. When the bean sprouts come to the position where the cutter 88 of the lower running path is arranged, as described with respect to the upper running path, the lower end portions of the bean sprouts projecting from the lower end openings of the bean sprouts receiving cells 75 to be received on the bean sprout lower end portions receiving conveyor 84 are cut off by the cutter 88 provided at the appropriate height position. Thus, the bean sprouts having their both end portions cut off by the cutters are delivered onto the delivery conveyor 90 from the bean sprouts receiving cells 75.

In the embodiment of the cutting device as described above, in order to receive the lower end portions of the bean sprouts projecting from the lower ends of the bean sprouts receiving cells 75 as well as to discharge wastes, etc, falling down from the bean sprouts in the bean sprouts receiving cells 75, while the bean sprout lower end portions receiving conveyors 76, 84 are provided, instead of the conveyors, simple plate members may be provided.

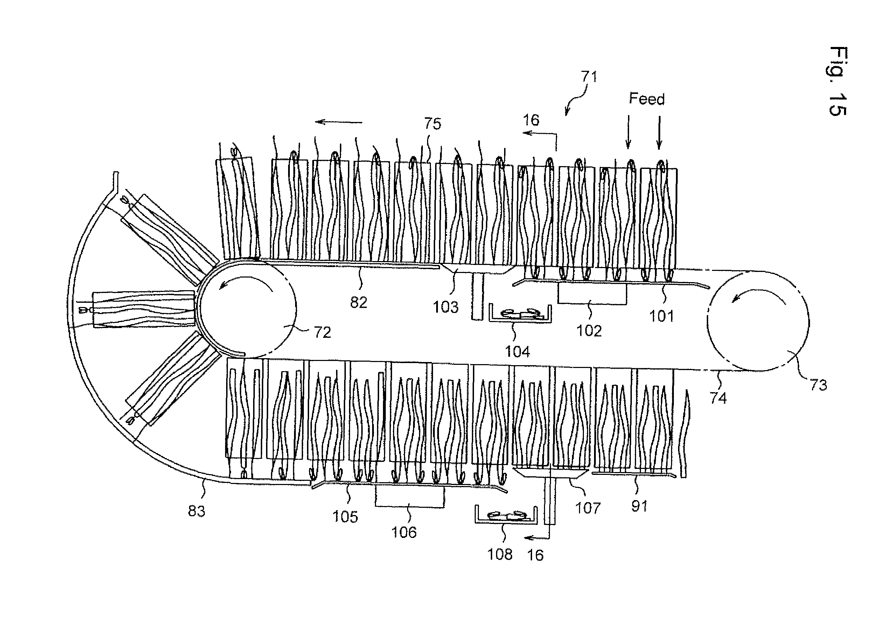

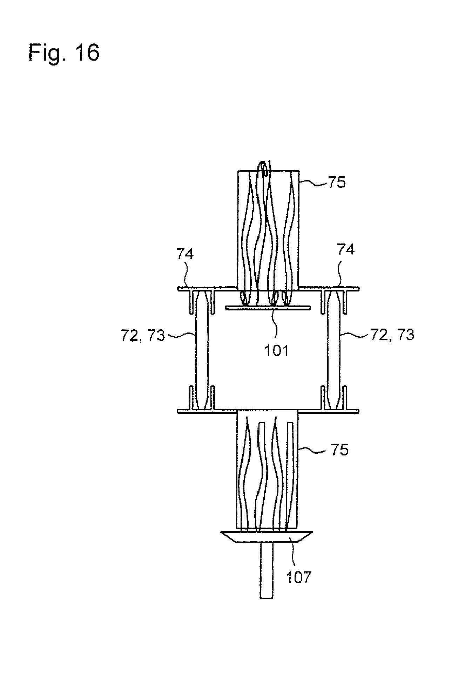

An embodiment of the cutting device in which the bean sprout lower end portions receiving members are constructed by such simple plate members is shown in Figs. 15 and 16, which will be described next.

In Figs. 15 and 16, numerals 101, 105, respectively, designate bean sprout lower end portions receiving plates as such plate members. These bean sprout lower end portions receiving plates 101, 105 are arranged with an interval maintained from the lower ends of the bean sprouts receiving cells 75 in the upper and lower running paths of the transfer conveyor 71 and are fitted with vibrators 102, 106, respectively. Numerals 103, 107 designate rotary type cutters by which lower end portions of the bean sprouts projecting from the lower ends of the beans sprouts receiving cells 75 to be received on the bean sprout lower end portions receiving plates 101, 105 are cut off. Numerals 104, 108 designate bean sprout lower end portions receivers for receiving end portions of the bean sprouts cut off by the cutters 103, 107.

Construction of other parts and components of the device shown in Figs. 15 and 16 is substantially the same as those of the device shown in Figs. 12 to 14. These parts and components are given with the same reference numerals and description thereof will be omitted.

In the cutting device of the present embodiment, except that the bean sprouts having their lower end portions to be cut off by the cutters 103, 107 are received and transferred on the bean sprout lower end portions receiving plates 101, 105, both end portions of the bean sprouts are likewise removed as in the cutting device shown in Figs. 12 to 14. In the present embodiment, while the cutters are employed as the rotary type cutters, the cutters may also be employed as the blade type cutters, like the case of the device shown in Figs. 12 to 14. Also, in Fig. 16 of the present embodiment, while the bean sprouts receiving cells 75 are illustrated as bean sprouts receiving cells comprising none of the movable side plates 92 as shown in Fig. 13, the bean sprouts receiving cells 75 of the present embodiment may preferably be constructed comprising the movable side plates 92 as shown in Fig. 13 so that the lower end portions of the bean sprouts are easily cut off by the cutters.

In the foregoing, while the cutting device according to the present invention has been described based on the embodiments as illustrated, the cutting device of the present invention is not limited to these embodiments. For example, in the embodiments as described above, while the bean sprouts receiving cells 75 are constructed as sleeve shaped cells, the cells may be constructed with such an arbitrary shape as to easily receive and accommodate the bean sprouts having their lengthwise directions arrayed by the bean sprouts arraying device. One example thereof is such that when the cell comes to the bean sprouts receiving position, the upper opening of the cell is laterally (horizontally) slightly enlarged and when feeding of the bean sprouts is finished, the opening returns to the original size.

Also, while the bean sprout lower ends receivers 82, 91 are constructed by plate members that merely function to receive the bean sprouts, these bean sprout lower ends receivers 82, 91 may also be constructed by conveyors, like the bean sprout lower end portions receiving conveyors 76, 84. Further, in the embodiments as illustrated, while the bean sprout lower end portions receiving conveyors 76, 84 and bean sprout lower end portions receiving plates 101, 105 have been described as to be vibrated by the vibrators in the vertical or horizontal direction relative to the lower openings of the bean sprouts receiving cells, to provide these vibrators is not essential but construction comprising no such vibrator can also be employed. On the other hand, the bean sprouts receiving cells 75 may be likewise vibrated by a vibrator.

Further, in the embodiments as illustrated, while the blade type cutters 80, 88 or rotary type cutters 103, 107 are employed for cutting the end portions of the bean sprouts, the cutter is not limited to these types but may be of other types. Also, even if the blade type cutter is to be employed, it is not necessarily a stationary cutter but may be an arbitrary cutter, such as a blade type cutter reciprocatingly operated so as to facilitate the cutting.

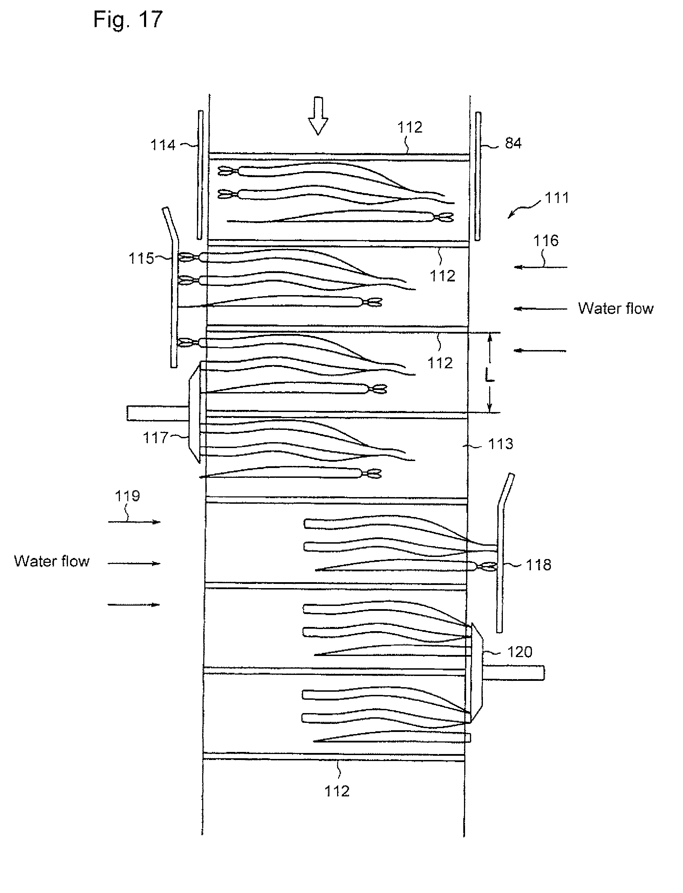

Next, another cutting device shown in Fig. 17 will be described. In Fig. 17, numeral 111 designates a conveyor of the cutting device. This conveyor 111 is constructed to run to the lower part from the upper part in Fig. 17. A plurality of partitioning plates 112 rising from the conveyor 111 are orthogonally provided to a running direction of the conveyor 111 with an interval L maintained between each of the partitioning plates 112. By these partitioning plates 112, a plurality of bean sprouts receiving sections 113 are formed being arrayed in the running direction of the conveyor 111.

In the bean sprouts receiving sections 113, the bean sprouts of which lengthwise directions are arrayed in parallel with the partitioning plates 112 are received. Hence, a lengthwise size of the bean sprouts receiving sections 113 may be such that the bean sprouts lying orthogonally to the running direction of the conveyor 111 can be received into the bean sprouts receiving sections 113. Also, the interval between each of the partitioning plates 112 can be appropriately selected so as to correspond to the size including thickness of the bean sprouts to be treated.

Numeral 114 designates a side plate provided rising on both sides of the conveyor 111. On one side of the conveyor 111 at a downstream end of the side plate 114, a bean sprout end portions receiving plate 115 as a bean sprout end portions arraying member of the present invention is provided with an interval maintained from a side edge of the conveyor 111. On the other side of the conveyor 111 opposite to the bean sprout end portions receiving plate 115, a water supply means (not shown) is provided that generates water flow 116 flowing toward the bean sprout end portions receiving plate 115 in the bean sprouts receiving sections 113 of the conveyor 111. Downstream of the bean sprout end portions receiving plate 115, a rotary type cutter 117 is provided so that a blade thereof is positioned between the side edge of the conveyor 111 and the bean sprout end portions receiving plate 115. On the other side of the conveyor 111 downstream of the cutter 117, like the case of the bean sprout end portions receiving plate 115, another bean sprout end portions receiving plate 118 is provided with an interval maintained from the other side edge of the conveyor 111. On the other side of the conveyor 111 opposite to the bean sprout end portions receiving plate 118, another water supply means (not shown) is provided that generates water flow 119 flowing toward the bean sprout end portions receiving plate 118 in the bean sprouts receiving sections 113 of the conveyor 111. Downstream of the bean sprout end portions receiving plate 118, another rotary type cutter 120 is provided so that a blade thereof is positioned between the side edge of the conveyor 111 and the bean sprout end portions receiving plate 118.

Next, a bean sprout both end portions cutting and removing operation by the cutting device shown in Fig. 17 will be described. The bean sprouts of which both end portions are to be removed have their lengthwise directions arrayed by the bean sprouts arraying device as shown in Figs. 3 and 4, for example, and are in this state delivered to the direction along the longitudinal grooves 33 from the right side end of Figs. 3 and 4. Then, they are supplied along their lengthwise direction to be received into the bean sprouts receiving sections 113 of the conveyor 111, wherein their lengthwise direction is orthogonal to the running direction of the conveyor 111. Thus, the bean sprouts are transferred by the conveyor 111 in a direction of a white arrow in Fig. 17. When the bean sprouts in the bean sprouts receiving sections 113 come to the position where the bean sprout end portions receiving plate 115 is arranged, they are moved toward the bean sprout end portions receiving plate 115 by the water flow 116 supplied from the not shown water supply means. Thereby, the end portions on the left side in the figure of the bean sprouts in the bean sprouts receiving sections 113 abut on the bean sprout end portions receiving plate 115 and the left side end portions of the bean sprouts are arrayed.

When the bean sprouts having their end portions arrayed on the left side in the figure, as mentioned above, come to the position of the cutter 117, the end portions are cut off at the position between the left side edge of the conveyor 111 and the bean sprout end portions receiving plate 115. When the bean sprouts receiving sections 113 in which the bean sprouts having their end portions cut and removed on the left side are received come to the position where the bean sprout end portions receiving plate 118 is arranged, the bean sprouts in the bean sprouts receiving sections 113 are moved toward the bean sprout end portions receiving plate 118 by the water flow 119 supplied from the not shown water supply means. Thereby, the end portions on the right side in the figure of the bean sprouts in the bean sprouts receiving sections 113 abut on the bean sprout end portions receiving plate 118 and the right side end portions of the bean sprouts are arrayed. Thus, when the bean sprouts having the end portions on the right side arrayed come to the position of the cutter 120, the end portions are cut off at the position between the right side edge of the conveyor 111 and the bean sprout end portions receiving plate 118. The bean sprouts having their both end portions so cut off and removed are discharged from the conveyor 111.

It is to be noted that in order for the arrayed state of the bean sprouts in the bean sprouts receiving sections 113 not to be disarrayed during the cutting operation by the cutters 117, 120, it is preferable to provide a bean sprout upper portions pressing member, such as a plate member, belt or the like, for pressing from above the bean sprouts in the bean sprouts receiving sections 113.

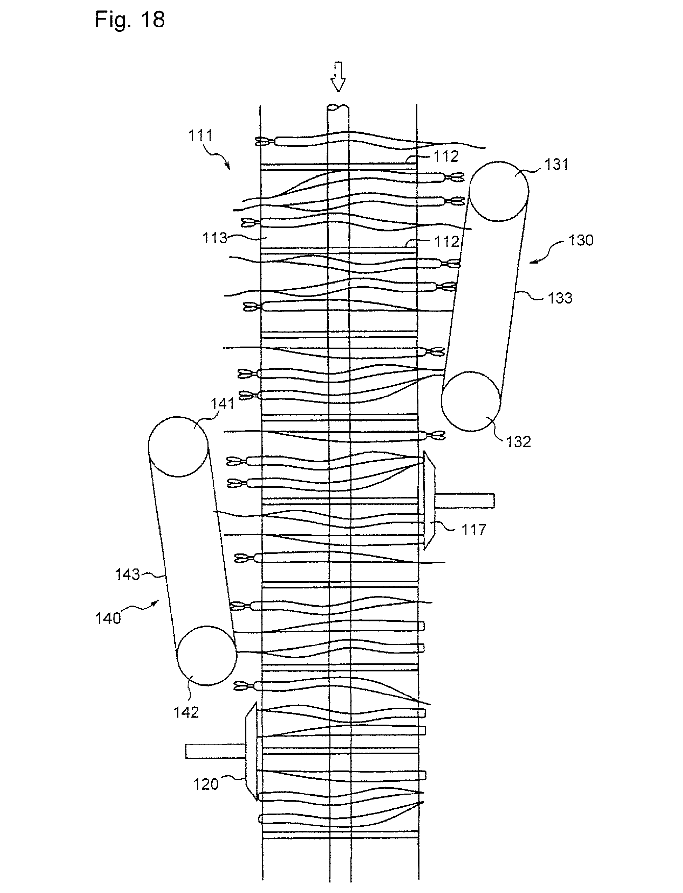

Next, still another cutting device will be described based on an embodiment shown in Fig. 18. There, numeral 111 designates a conveyor, numeral 112 a plurality of partitioning plates and numeral 113 a plurality of bean sprouts receiving sections and the construction of these parts and components is the same as the case of the embodiment shown in Fig. 17. Hence, repeated description thereof will be omitted. Numeral 130 designates a bean sprout end portions arraying conveyor as a bean sprout end portions arraying member of the present invention. The bean sprout end portions arraying conveyor 130 comprises an endless belt 133 that is wound between two pulleys 131, 132. Running direction of the conveyor 111 is shown by a white arrow and thus the conveyor 111 runs toward the lower side in Fig. 18. Relative to a side edge of the conveyor 111, the pulley 132 is arranged nearer than the pulley 131 and thus the bean sprout end portions arraying conveyor 130 is obliquely arranged relative to the conveyor 111 such that the pulley 132 side of the conveyor 130 more approaches the side edge of the conveyor 111 than the pulley 131 side of the conveyor 130. Downstream of the bean sprout end portions arraying conveyor 130, a rotary type cutter 117 is arranged and a blade thereof is positioned between the right side edge in the figure of the conveyor 111 and the pulley 132.

Downstream of the cutter 117 and on the left side in the figure of the conveyor 111, another bean sprout end portions arraying conveyor 140 is arranged. The bean sprout end portions arraying conveyor 140 comprises an endless belt 143 that is wound between two pulleys 141, 142. Relative to the side edge of the conveyor 111, the pulley 142 is arranged nearer than the pulley 141 and thus the bean sprout end portions arraying conveyor 140 is obliquely arranged relative to the conveyor 111 such that the pulley 142 side of the conveyor 140 more approaches the side edge of the conveyor 111 than the pulley 141 side of the conveyor 140. Downstream of the bean sprout end portions arraying conveyor 140, a rotary type cutter 120 is arranged and a blade thereof is positioned between the left side edge in the figure of the conveyor 111 and the pulley 142.

Next, a bean sprout both end portions cutting and removing operation by the cutting device shown in Fig. 18 will be described. The bean sprouts having their lengthwise directions arrayed by the bean sprouts arraying device as shown in Figs. 3 and 4, for example, are supplied into the bean sprouts receiving sections 113 of the conveyor 111, wherein the lengthwise direction of the bean sprouts is orthogonal to the running direction of the conveyor 111 shown by the white arrow in Fig. 18. Thus, the bean sprouts are transferred by the conveyor 111. When the bean sprouts come to the position where the bean sprouts end portions arraying conveyor 130 is arranged, the end portions of the bean sprouts projecting from the side edge on the right side in the figure of the conveyor 111 are inwardly pushed corresponding to the obliqueness of the bean sprout end portions arraying conveyor 130. Thereby, the end portions of the bean sprouts are arrayed at the position of the pulley 132. Thus, the right side end portions of the bean sprouts projecting by an approximate constant length from the right side edge of the conveyor 111 are cut off by the downstream cutter 117.

When the bean sprouts receiving sections 113 in which the bean sprouts having their right side end portions cut off, as mentioned above, are received come to the position where the bean sprout end portions arraying conveyor 140 is arranged, the end portions of the bean sprouts projecting from the side edge on the left side in the figure of the conveyor 111 are inwardly pushed corresponding to the obliqueness of the bean sprout end portions arraying conveyor 140. Thereby, the end portions of the bean sprouts are arrayed at the position of the pulley 142. Thus, the left side end portions of the bean sprouts projecting by an approximate constant length from the left side edge of the conveyor 111 are cut off by the downstream cutter 120. The bean sprouts having their both end portions including the root portions and sprouting portions cut off in this way are discharged from the conveyor 111.

In the foregoing, while the bean sprout both end portions cutting and removing step has been concretely described based on the embodiments of the cutting device, it is a matter of course that the cutting device used for the bean sprout both end portions cutting and removing step of the present invention is not limited to these embodiments.

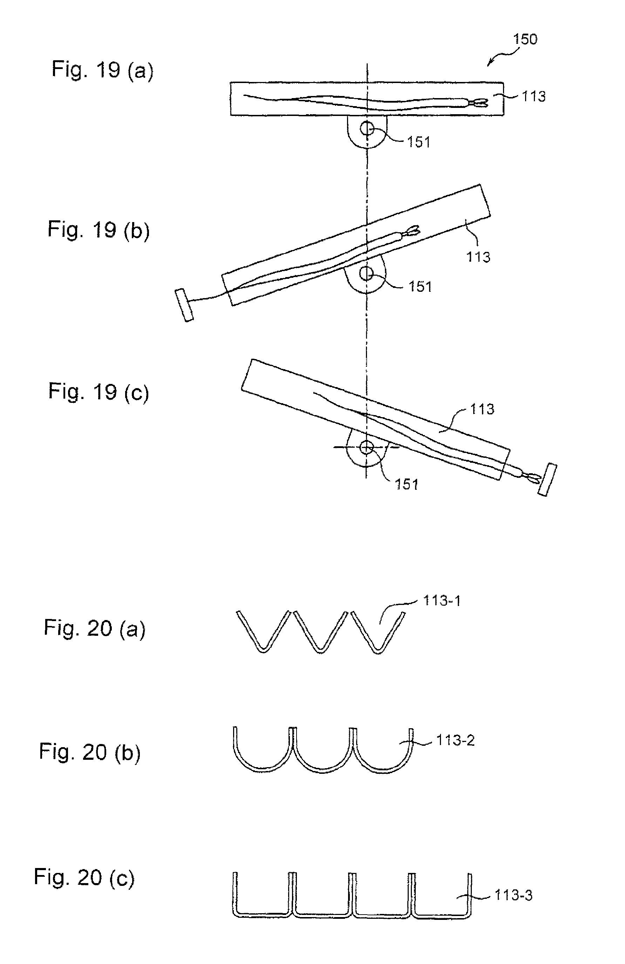

For example, in the embodiments shown in Figs. 17 and 18, while the bean sprouts receiving sections 113 have been described as members horizontally arranged, they may be constructed as members tilted or tiltable downwardly on the right side and left side in the figure where the end portions of the bean sprouts are to be cut off. One example thereof will be described with reference to Figs. 19 (a), (b) and (c). Each of the bean sprouts receiving sections 113 is constructed as a tray 150 having its upper side and right and left sides open. The tray 150 is tiltably constructed to the right and left sides around a width directional central portion 151 of the tray 150, as shown in Figs. 19 (a) to (c). This tray 150 so constructed is tilted toward the side of the end portions of the bean sprouts to be cut off so that the end portions of the bean sprouts are easily collected to the downwardly tilted side. By this construction, arraying of the end portions to be cut off can be smoothly carried out.

Also, in the above-mentioned embodiments, while the cross sectional shape of the bean sprouts receiving sections 113 is not specifically defined, a bottom portion thereof may be variously constructed so that the bean sprouts received therein can be easily arrayed in their lengthwise direction. Examples of the bottom portion cross sectional shape are V-shaped longitudinal grooves 113-1 as shown in Fig. 20 (a), V-shaped longitudinal grooves 113-2 as shown in Fig. 20 (b) and square-shaped longitudinal grooves 113-3 as shown in Fig. 20 (c).

Also, in the embodiment of Fig. 17, while the description has been made such that the means to displace the bean sprouts in the bean sprouts receiving sections to the direction of the cutter is the water flow 116, 119, instead of the water flow, such an air supply means as generates air flow to be blown to the bean sprouts in the bean sprouts receiving sections may be provided so that the bean sprouts are displaced to the direction of the cutter.

Further, in the embodiment of Fig. 18 also, as in the case of the cutting device of Fig. 17, it is effective to provide a water supply means or air supply means to generate water flow or air flow toward the bean sprout end portions arraying conveyor 130, 140.

In the foregoing, the devices of Figs. 1 to 20 are descried as embodiments for carrying out the respective steps in the case that the three steps of the bean sprouts separating step, bean sprouts arraying step and bean sprout both end portions cutting and removing step are sequentially combined. Nevertheless, the bean sprouts separating device shown in Figs. 1 and 2, the bean sprouts arraying devices shown in Figs. 3 and 4 and Figs. 5 to 7 and the bean sprout both end portions cutting and removing devices shown in Figs. 8 to 11, Figs. 12 to 16 and Figs. 17 to 20 can also be used as devices for carrying out the respective single steps or for carrying out a combination of two steps out of the three steps so that desired bean sprouts can be obtained according to the state or shapes of the bean sprouts as harvested or the growing state thereof.

Moreover, while all the description of the present invention has been made on the basis that the object to be treated is bean sprouts, the present invention may be applied to various sprouts of vegetable seeds or grain or corn, other than the bean sprouts, to the extent that they are similar to the bean sprouts in the shape and physical properties.

## Claims

1. A bean sprout both end portions removing method for mechanically removing root portions and sprouting portions of bean sprouts, **characterized in** comprising steps of:
a bean sprouts separating step to separate and remove undergrown bean sprouts and short bean sprout fractions from bean sprouts as harvested,
a bean sprouts arraying step to array lengthwise directions of the bean sprouts separated by the bean sprout separating step and
a bean sprout both end portions cutting and removing step to cut and remove both end portions of the bean sprouts arrayed by the bean sprouts arraying step.

2. A bean sprout both end portions removing method as claimed in Claim 1, **characterized in that** said bean sprouts separating step is carried out by:
supplying the bean sprouts to be separated in a dispersed state onto a lattice conveyor that is moved forming a plurality of lattice spaces arranged with a predetermined interval maintained between each of said lattice spaces and
transferring said lattice conveyor together with a belt conveyor that is arranged below said lattice conveyor with a small gap maintained from said lattice conveyor so that the bean sprouts not less than a predetermined length are left on said lattice conveyor and the bean sprouts less than the predetermined length are separated onto said belt conveyor and removed.

3. A bean sprout both end portions removing method as claimed in Claim 1, **characterized in that** said bean sprouts arraying step is carried out by:
supplying the bean sprouts onto a grooved plate that is formed with a plurality of longitudinal grooves arranged in parallel with each other and is applied with vibration having upward and downward directional components and
moving the bean sprouts so supplied onto said grooved plate to be received into said longitudinal grooves so that the lengthwise directions of the bean sprouts are arrayed.

4. A bean sprout both end portions removing method as claimed in Claim 1, **characterized in that** said bean sprouts arraying step is carried out by:
putting the bean sprouts into a hopper of which a horizontal directional cross section is a flat shape and vibrating them with horizontal directional components and
transferring a conveyor below said hopper in a direction orthogonal to a plurality of partitions, said partitions being arranged on said conveyor with an interval maintained between each of said partitions in a direction along a minor side of the cross sectional shape of said hopper, so that the bean sprouts falling down from said hopper are received on said conveyor and transferred having their lengthwise directions arrayed in a direction along said partitions.

5. A bean sprout both end portions removing method as claimed in Claim 1, **characterized in that** said bean sprout both end portions cutting and removing step is carried out by:
supplying the bean sprouts onto a cutting conveyor, said cutting conveyor being provided with a plurality of cutters, each cutter having its each side edge formed with a blade portion, arranged horizontally and orthogonally to a conveyor running direction with the blade portion of one cutter being opposed to the blade portion of an adjacent cutter with an interval maintained between them, and
moving a transfer conveyor at a velocity different from a velocity of said cutting conveyor, said transfer conveyor comprising a plurality of transfer bars and being arranged above said cutting conveyor with a small gap maintained from said cutting conveyor, so that by a relative movement between said cutting conveyor and said transfer conveyor, the root portions and sprouting portions of the bean sprouts are cut off and removed.

6. A bean sprout both end portions removing method as claimed in Claim 1, **characterized in that** said bean sprout both end portions cutting and removing step is carried out by:
supplying the bean sprouts having their lengthwise directions vertically arrayed to be received into a plurality of bean sprouts receiving cells, each cell being formed with a sleeve shape having its both ends open and being arranged having its lengthwise direction vertically directed, continuously arranged in a row to rise on an endless transfer conveyor having upper and lower running paths and
in each of the upper and lower running paths of said transfer conveyor, while end portions of the bean sprouts are received on a bean sprout lower end portions receiving member that is arranged with an interval maintained from lower ends of said bean sprouts receiving cells, transferring the bean sprouts in this state so that end portions of the bean sprouts projecting between the lower ends of said bean sprouts receiving cells and said bean sprout lower end portions receiving member are cut off by a cutter.

7. A bean sprout both end portions removing method as claimed in Claim 1, **characterized in that** said bean sprout both end portions cutting and removing step is carried out by:
supplying the bean sprouts having their lengthwise directions arrayed horizontally and orthogonally to a conveyor running direction to be received into a plurality of bean sprouts receiving sections, each section having its lengthwise direction arrayed horizontally and orthogonally to the conveyor running direction, continuously arranged along the conveyor running direction on a conveyor and
arraying end portions of the bean sprouts so received into said bean sprouts receiving sections, said end portions projecting from each side edge of said bean sprouts receiving sections, by a bean sprout end portions arraying member arranged on each side of said conveyor with an interval maintained from a side edge of said conveyor so that the projecting end portions of the bean sprouts are cut off by a cutter.

8. A bean sprouts separating device suitable for carrying out the bean sprouts separating step as mentioned in Claim 1, **characterized in that** said bean sprouts separating device comprises a lattice conveyor to be moved being formed with a plurality of lattice spaces arranged with a predetermined interval maintained between each of said lattice spaces and a belt conveyor to run below said lattice conveyor with a small gap maintained from said lattice conveyor and bean sprouts to be treated are supplied in a dispersed state onto said lattice conveyor and transferred so that the bean sprouts not less than a predetermined length are left on said lattice conveyor and the bean sprouts less than the predetermined length are separated onto said belt conveyor and removed.

9. A bean sprouts separating device as claimed in Claim 8, **characterized in that** said lattice conveyor comprises a plurality of longitudinal bars arranged elongating in a conveyor running direction with an interval maintained between adjacent ones of said longitudinal bars and a bar conveyor comprising a plurality of lateral bars, said lateral bars being orthogonally arranged to said longitudinal bars and fitted to an endless chain to be moved in a lengthwise direction of said longitudinal bars.

10. A bean sprouts separating device as claimed in Claim 8 or 9, **characterized in that** the lattice spaces of said lattice conveyor are formed by bars of which cross sections or at least upper halves thereof are formed with a circular shape or a rounded shape.

11. A bean sprouts arraying and supplying device suitable for carrying out the bean sprouts arraying step as mentioned in Claim 1, **characterized in that** said bean sprouts arraying and supplying device comprises a grooved plate formed with a plurality of longitudinal grooves arranged in parallel with each other and a vibrator by which said grooved plate is given with vibration including upward and downward directional components and bean sprouts supplied onto said grooved plate are moved into said longitudinal grooves and supplied having their lengthwise directions arrayed.

12. A bean sprouts arraying and supplying device as claimed in Claim 11, **characterized in** comprising a plurality of said grooved plates arranged in line.

13. A bean sprouts arraying and supplying device as claimed in Claim 11, **characterized in** comprising a bent bean sprouts removing means by which bent bean sprouts caught on crest portions of said grooved plate are removed from said grooved plate.

14. A bean sprouts arraying and supplying device as claimed in any one of Claims 11 to 13, **characterized in** comprising a water supply means by which water flow is supplied for moving the bean sprouts on said grooved plate along said grooves.

15. A bean sprouts arraying and supplying device as claimed in any one of Claims 11 to 13, **characterized in** comprising an air supply means by which air flow is supplied for moving the bean sprouts on said grooved plate along said grooves.

16. A bean sprouts arraying and supplying device suitable for carrying out the bean sprouts arraying step as mentioned in Claim 1, **characterized in that** said bean sprouts arraying and supplying device comprises a hopper of which a horizontal directional cross section is a flat shape, a vibrator by which said hopper is vibrated with horizontal directional components and a conveyor arranged below said hopper and formed with a plurality of partitions arranged in a direction along a minor side of the cross section of said hopper with an interval maintained between each of said partitions, said conveyor running in a direction orthogonal to said partitions, and bean sprouts falling down from said hopper are received on said conveyor and transferred having their lengthwise directions arrayed in a direction along said partitions.

17. A bean sprouts arraying and supplying device as claimed in Claim 16, **characterized in that** said conveyor comprises an endless chain conveyor fitted with said plurality of partitions with the interval maintained between them and an endless belt conveyor arranged on the inner side of said chain conveyor and said chain conveyor runs in the same direction as said belt conveyor at a velocity higher than a velocity of said belt conveyor.

18. A bean sprouts arraying and supplying device as claimed in Claim 17, **characterized in** comprising a smoothing member for scraping down the bean sprouts caught on said partitions.

19. A bean sprout both end portions cutting and removing device suitable for carrying out the bean sprout both end portions cutting and removing step as mentioned in Claim 1, **characterized in that** said bean sprout both end portions cutting and removing device comprises a cutting conveyor provided with a plurality of cutters, each cutter having its each side edge formed with a blade portion, arranged horizontally and orthogonally to a conveyor running direction with the blade portion of one cutter being opposed to the blade portion of an adjacent cutter with an interval maintained between them and a transfer conveyor provided with a plurality of transfer bars and arranged above said cutting conveyor with a small gap maintained from said cutting conveyor to be moved at a velocity different from a velocity of said cutting conveyor and by a relative movement between said cutting conveyor and said transfer conveyor, the root portions and sprouting portions of the bean sprouts are cut off and removed.

20. A bean sprout both end portions cutting and removing device as claimed in Claim 19, **characterized in that** said blade portion of the cutter is formed by a combination of at least two blades out of an orthogonal blade, oblique blade and parallel blade, all relative to a cutter moving direction.

21. A bean sprout both end portions cutting and removing device as claimed in Claim 19 or 20, **characterized in that** said cutting conveyor repeats transfers in the conveyor running direction and stops and said transfer conveyor does a continuous transfer in the conveyor running direction at a velocity lower than the velocity of said cutting conveyor.

22. A bean sprout both end portions cutting and removing device as claimed in Claim 19 or 20, **characterized in** comprising a bean sprouts arraying and supplying device by which the bean sprouts having their both end portions to be cut off and having their lengthwise directions orthogonally arrayed to the conveyor running direction are supplied in a dispersed state onto said cutting conveyor.

23. A bean sprout both end portions cutting and removing device as claimed in Claim 22, **characterized in that** a bean sprouts refining device is provided upstream of said bean sprouts arraying and supplying device for removing undergrown bean sprouts, broken short bean sprouts and bent bean sprouts from the bean sprouts to be treated.

24. A bean sprout both end portions cutting and removing device suitable for carrying out the bean sprout both end portions cutting and removing step as mentioned in Claim 1, **characterized in that** said bean sprout both end portions cutting and removing device comprises an endless transfer conveyor, having upper and lower running paths, fitted with a plurality of bean sprouts receiving cells, each cell being formed with a sleeve shape having its both ends open and being arranged having its lengthwise direction vertically directed, continuously arranged in a row in a conveyor running direction, said bean sprout both end portions cutting and removing device further comprising in each of the upper and lower running paths of said transfer conveyor a bean sprout lower end portions receiving member for receiving lower end portions of the bean sprouts arranged with an interval maintained from lower end openings of said bean sprouts receiving cells and a cutter of which a cutting blade is positioned between the lower end openings of said bean sprouts receiving cells and said bean sprout lower end portions receiving member, and the bean sprouts having their lengthwise directions vertically arrayed are supplied into said bean sprouts receiving cells and transferred and end portions of the bean sprouts projecting between the lower ends of said bean sprouts receiving cells and said bean sprout lower end portions receiving member are cut off by said cutter.

25. A bean sprout both end portions cutting and removing device as claimed in Claim 24, **characterized in** comprising a vibrator for vibrating any one of said bean sprout lower end portions receiving member and said bean sprouts receiving cells.

26. A bean sprout both end portions cutting and removing device suitable for carrying out the bean sprout both end portions cutting and removing step as mentioned in Claim 1, **characterized in that** said bean sprout both end portions cutting and removing device comprises a main conveyor provided with a plurality of bean sprouts receiving sections for receiving therein the bean sprouts having their lengthwise directions arrayed horizontally and orthogonally to a conveyor running direction, each of said sections having its lengthwise direction arranged horizontally and orthogonally to the conveyor running direction, said bean sprouts receiving sections being continuously arranged along the conveyor running direction, said bean sprout both end portions cutting and removing device further comprising a bean sprout end portions arraying member arranged on each side of said main conveyor with an interval maintained from a side edge of said main conveyor for receiving and arraying end portions of the bean sprouts supplied into said bean sprouts receiving sections, said end portions projecting from each side edge of said bean sprouts receiving sections, said bean sprout both end portions cutting and removing device further comprising a cutter arranged on each side of said main conveyor, and the projecting end portions of the bean sprouts are cut off by said cutter.

27. A bean sprout both end portions cutting and removing device as claimed in Claim 26, **characterized in that** said bean sprout end portions arraying member is a bean sprout end portions arraying conveyor arranged on each side of said main conveyor with an interval maintained from the side edge of said main conveyor, said bean sprout end portions arraying conveyor being obliquely arranged relative to the conveyor running direction such that a downstream side of said bean sprout end portions arraying conveyor more approaches said main conveyor than an upstream side of said bean sprout end portions arraying conveyor and said cutter is arranged in the vicinity of a downstream end of said bean sprout end portions arraying conveyor and the end portions of the bean sprouts projecting from each side edge of said bean sprouts receiving sections are cut off by said cutter.

28. A bean sprout both end portions cutting and removing device as claimed in Claim 26 or 27, **characterized in that** said bean sprouts receiving sections are constructed being downwardly tilted to a direction of said bean sprout end portions arraying member or said bean sprout end portions arraying conveyor.

29. A bean sprout both end portions cutting and removing device as claimed in Claim 26 or 27, **characterized in that** said bean sprout end portions arraying member or said bean sprout end portions arraying conveyor is vibrated in a direction toward the side edge of said bean sprouts receiving sections.

30. A bean sprout both end portions cutting and removing device as claimed in Claim 26 or 27, **characterized in that** said main conveyor is constructed tiltably on both sides around a width directional central portion of said main conveyor and by tilting around the central portion, said bean sprouts receiving sections are downwardly tilted to a direction of said bean sprout end portions arraying member or said bean sprout end portions arraying conveyor.

31. A bean spout both end portions cutting and removing device as claimed in Claim 26 or 27, **characterized in that** said bean sprout both end portions cutting and removing device comprises a water supply means for supplying water flow onto said bean sprouts receiving sections and is so constructed that by the water flow supplied onto said bean sprouts receiving sections, the bean sprouts in said bean sprouts receiving sections are displaced to a direction of said cutter and the end portions of the bean sprouts are cut off by said cutter.

32. A bean sprout both end portions cutting and removing device as claimed in Claim 26 or 27, **characterized in that** said bean sprout both end portions cutting and removing device comprises an air supply means for supplying air flow onto said bean sprouts receiving sections and by the air flow supplied onto said bean sprouts receiving sections, the bean sprouts in said bean sprouts receiving sections are displaced to a direction of said cutter and the end portions of the bean sprouts are cut off by said cutter.
